# FASCICULE DE BREVET EUROPEEN

(11) **EP 1 750 834 B1**
(45) Date de publication et mention de la délivrance du brevet: **04.11.2009**
(21) Numéro de dépôt: 05757929.4
(22) Date de dépôt: 19.04.2005
(51) Int. Cl.: B01F 17/00

(54) **NOUVEAUX EMULSIONNANTS ET APPLICATIONS POUR LA PREPARATION D'EMULSIONS VAPORISABLES**
NEUARTIGE EMULGATOREN UND IHRE VERWENDUNG BEI DER HERSTELLUNG VON VERDAMPFBAREN EMULSIONEN
NOVEL EMULSIFIERS AND THE USE THEREOF FOR PREPARING VAPORISABLE EMULSIONS

(30) Priorité: 23.04.2004 FR 0404328
(43) Date de publication de la demande: 14.02.2007
(73) Titulaire: AGRO INDUSTRIE RECHERCHES ET DEVELOPPEMENTS (A.R.D.), F-51100 Pomacle (FR)
(72) Inventeur: ERNENWEIN, Cedric, F-02860 NOUVION le VINEUX (FR); ESTRINE, Boris, F-51100 REIMS (FR)
(74) Mandataire: Eidelsberg, Victor Albert
(86) Numéro de dépôt international: PCT/FR2005/000939
(87) Numéro de publication internationale: WO 2005/110588

(56) Documents cités:
- US-A- 5 871 666
- US-B1- 6 245 821
- US-B1- 6 268 400
- US-B1- 6 596 779

## Description

La présente invention concerne de nouveaux émulsionnants à base de polyglycosides d'alkyle (APG) et d'alcool gras utiles pour la fabrication d'émulsions vaporisables.

Une émulsion est une dispersion d'un liquide dans un autre liquide non miscible. Pour être vaporisable, une émulsion doit être à la fois fluide et fine. L'extrême finesse des gouttelettes dispersées est d'une importance capitale dans la fabrication des émulsions' vaporisables car elle garantie leurs efficacités et leurs stabilités dans le temps.

Si les émulsions sont suffisamment fines, on parlera de « mini-émulsions ». Par « mini-émulsions », on désigne des émulsions avec des tailles de gouttes, ou granulométrie moyenne, comprises entre 0,05 et 1,00 micromètre de diamètre.

Les polyglycosides d'alkyles sont des composés tensioactifs non ionique bien connus pour la préparation d'émulsions. La demande de brevet EP 1 027 921 A1, au nom de la demanderesse, décrit des émulsions stables grâce à l'utilisation d'agents émulsionnants à base d'alcools gras et de polyglycosides d'alkyles contenant des polypentosides d'alkyles, choisis parmi les polyarabinosides et polyxylosides, en proportions bien déterminées. Les émulsions de ce document antérieur sont parfaitement stables mais ne sont pas vaporisables selon les critères décrits précédemment et ne peuvent pas non plus être préparées à froid.

La demande de brevet FR 2 784 904 décrit des compositions à base de polyglycosides d'alkyles et d'alcools gras pour la préparation d'émulsions fluides et stables. Les émulsionnants décrits dans cette demande sont des mélanges de polyglycosides d'alkyles dont les chaînes grasses comportent de 12 à 22 atomes de carbone et d'alcools gras de mêmes longueurs. Les émulsions décrites dans ce document antérieur possèdent des viscosités supérieures à 1000 mPa.s (à température ambiante, mesurée à l'aide d'un viscosimètre Brookfield) et ne peuvent pas être préparées à froid.

La demande de brevet EP 1 247 519 décrit des émulsions vaporisables obtenues à partir de polyolpolyhydroxystearate, de polyglycosides d'alkyles et d'un épaississant. Une telle composition est un mélange complexe de différents produits avec notamment un épaississant. Elle ne permet pas facilement l'obtention de mini-émulsion et nécessite généralement l'utilisation d'un épaississant et/ou d'un structurant supplémentaire afin d'obtenir des stabilités satisfaisantes.

La demande de brevet FR 2 804 885, décrit des compositions à base de polyglycosides d'alkyle en C36 et de dimerdiol permettant la préparation d'émulsions à froid avec une viscosité comprise entre 50 et 1500 mPa.s. Les compositions précitées ne permettent cependant pas la préparation de mini-émulsions. De plus le dimerdiol utilisé pour la préparation des compositions citées dans ce document antérieur est difficilement disponible, difficilement glycosilable et n'est pas utilisé en cosmétique.

Dans ces conditions, la présente invention a pour but de résoudre les problèmes techniques consistant en la fourniture de nouveaux émulsifiants liquides permettant d'obtenir facilement des émulsions et des mini-émulsions fluides ne nécessitant pas l'ajout de co-tensioactifs ou d'épaississants. Elles peuvent être préparées à froid et permettent la fabrication de préparations vaporisables. L'invention trouve des applications dans les domaines de la cosmétique, de la pharmacie, de la détergence, des traitements phytosanitaires ou insecticides. Les formules vaporisables ou les sprays sont des moyens pratiques pour appliquer un produit. Elles présentent plusieurs avantages par rapport aux autres présentations, comme ceux de pouvoir être facilement appliquées dans les endroits difficiles (déodorants), de permettre un dosage précis (fabrication de lingettes) ou de limiter la contamination du produit lors de l'utilisation (produits sans conservateurs). La fabrication de telles formules était jusqu'à présent limitée aux produits hydrosolubles ou contenant des solvants.

La solution conforme à la présente invention pour résoudre ce problème technique consiste en de nouvelles compositions à base de polyglycosides d'alkyles et d'alcools gras ramifiés, caractérisées en ce qu'elles comprennent :
- 20 à 95% en poids d'un ou plusieurs polyglycosides d'alkyles de formule (A):

   RO(G₁)a(G₂)b(G₃)c(G₄)d(G₅)e (A)
dans laquelle R est un radical aliphatique linéaire, avec ou sans insaturation, ayant 4 à 14 atomes de carbone; G₁,G₂,G₃,G₄,G,₅ sont des restes identiques ou différents d'oses choisis parmi les hexoses et les pentoses; a,b,c,d,et e étant égaux à 0 ou 1, la somme de a, b, c, d, et e étant au moins égale à 1.
- Et 5 à 80% en poids d'un ou plusieurs alcools ramifiés de

   formule (B) : CH(CₙH₂ₙ₊₁)(CₘH₂ₘ₊₁)CH₂-OH (B)
dans lequel m est un nombre entier compris entre 4 et 18, n est un nombre entier compris entre 2 et 18 et la somme (n+m) est supérieure ou égale à 6.

Il a été trouvé, et ceci constitue le fondement de l'invention, que de telles compositions se présentent sous la forme de liquides limpides et permettent facilement l'obtention d'émulsions stables, fluides et de granulométries réduites. Par « facilement » on entend sans l'apport excessif d'énergie comme le chauffage ou des vitesses de cisaillement importantes (par exemple supérieures à 10 000 tours par minute). De telles émulsions sont particulièrement intéressantes pour la fabrication de compositions vaporisables.

Il a également été trouvé que ces nouveaux émulsionnants sont solubles dans les huiles et permettent la fabrication de concentrés émulsionnables. On appelle « concentrés émulsionnables » des compositions anhydres ou à très faibles quantités d'eau contenant un agent émulsionnant et une phase lipophile constituée d'une ou plusieurs huiles ou solvants. Ces compositions sont solubles ou facilement dispersibles dans l'eau ou forment spontanément, par une simple dilution, une émulsion huile dans eau. Lesdites compositions seront particulièrement utilisées dans les domaines de la cosmétique, de la pharmacie, de la détergence, des traitements phytosanitaires et insecticides.

Une sous-famille préférée d'émulsionnant de l'invention est constituée d'au moins :
- 20 à 95% en poids d'un mélange polyglycosides d'alkyles contenant :
   - 5 à 95 % en poids de polyglycosides d'alkyles de formule I :

      R₁O(G₁)a(G₂)b(G₃)c(-G₄)d(G₅)e (I)
   - et de 95 à 5% en poids de polyglycosides d'alkyles de formule II :

      R₂O(G₁)a(G₂)b(G₃)C(G₄)d(G₅)e (II)

      dans lesquelles R₁ est un radical aliphatique linéaire, avec ou sans insaturation, ayant 8 atomes de carbone, R₂ un radical aliphatique linéaire, avec ou sans insaturation, à 10 atomes de carbone; G₁,G₂,G₃,G₄,G₅ sont des restes identiques ou différents d'oses choisis parmi les hexoses et les pentoses; a,b,c,d,et e étant égaux à 0 ou 1, la somme de a, b, c, d, et e étant au moins égale à 1.
- et au moins 5 à 80% en poids d'un ou plusieurs alcools de formule R'OH, dans laquelle R' est un radical alkyl ramifié :

   CH(CₙH₂ₙ₊₁)(CₘH₂ₘ₊₁)CH₂-
dans lequel m est un nombre entier compris entre 4 et 18, n est un nombre entier compris entre 2 et 18 et la somme (n+m) est supérieure ou égale à 6.

L'émulsionnant, objet de la présente demande, peut également contenir dans le mélange de polyglycosides d'alkyles tel que défini auparavant, de 1 à 60% en poids de polyglycosides d'alkyles de formule (III) R₃O(G₁)a(G₂)b(G₃)c(G₄)d(G₅)e et de 1 à 10% en poids de polyglycosides d'alkyles de formule (IV) R₄O(G₁)a(G₂)b(G₃)c(G₄)d(G₅)e dans lesquelles R₃ est un radical aliphatique linéaire, avec ou sans insaturation, ayant 12 atomes de carbone; R₄ un radical aliphatique linéaire, avec ou sans insaturation, ayant 14 atomes de carbone; G₁,G₂,G₃,G₄,G₅ sont des restes identiques ou différents d'oses choisis parmi les hexoses et les pentoses; a,b,c,d,et e étant égaux à 0 ou 1, la somme de a, b, c, d, et e étant au moins égale à 1.

Une composition particulièrement préférée dans le cadre de la présente invention est constituée de :
- 40 à 60% en poids d'un mélange de polyglycosides d'alkyles essentiellement constitué de :
   - 50 à 70% en poids d'un polyglycoside d'alkyle de formule (I) :

      R₁O(G₁)a(G₂)b(G₃)c(G₄)d(G₅)e (I)
   - 10 à 30% en poids d'un polyglycoside d'alkyle de formule (II) :

      R₂O(G₁)a(G₂)b(G₃)c(G₄)d(G₅)e (II)
   - 10 à 30% en poids d'un polyglycoside d'alkyle de formule (III) :

      R₃O(G₁)a(G₂)b(G₃)c(G₄)d(G₅)e (III)
   dans lesquelles R₁, R₂ et R₃ représentent chacun un radical aliphatique linéaire, avec ou sans insaturation, ayant respectivement 8, 10 et 12 atomes de carbone, G₁,G₂,G₃,G₄,G₅ sont des restes identiques ou différents d'oses choisis parmi les hexoses et les pentoses, a,b,c,d,et e étant égaux à 0 ou 1, la somme de a, b, c, d, et e étant au moins égale à 1.
- Et 40 à 60% en poids d'un ou plusieurs alcools de formule R'OH, dans laquelle R' est un radical alkyl ramifié :

   CH(CₙH₂ₙ₊₁)(CₘH₂ₘ₊₁)CH₂-
dans lequel m est un nombre entier compris entre 4 et 6, n est un nombre entier compris entre 6 à 8.

Les polyglycosides d'alkyles de formules (I), (II) et (III) et (IV) précités peuvent comporter à titre de reste de saccharide représenté respectivement par G₁, G₂, G₃, G₄ et G₅ un reste d'ose choisi parmi les hexoses comme le glucose, le fructose, le galactose, le mannose, le maltose, le sorbose ; les pentoses comme l'arabinose, le xylose, le ribose, le xylulose.

Chaque reste d'ose peut être sous sa forme isomérique α ou β, de la série L ou D et sous forme furanosique ou pyranosique.

Avantageusement, on préfère le D-glucose, le D-xylose et le L-arabinose présents abondamment dans l'amidon ou l'hémicellulose des végétaux.

D'une manière particulièrement avantageuse, et ceci représente l'un des aspects de la présente invention, on préfère des mélanges d'hexoses et de pentoses dans les proportions de 0 à 20% en poids d'hexoses et de 80 à 100% en poids de pentoses.

On préfère, parmi les hexoses, le D-glucose et parmi les pentoses, le D-Xylose.

L'expression « polyglycosides d'alkyles» utilisée dans le cadre de la présente invention désigne indifféremment les monoglycosides d'alkyles (degré de polymérisation égale à 1) ou les polyglycosides d'alkyles (degré de polymérisation supérieur à 1).

L'expression « essentiellement constitué » utilisée dans le cadre de la présente demande doit s'entendre par n'exclue pas la présence, au sein du mélange de polyglycosides d'alkyles, de composés minoritaires en quantités cumulées maximales de 5% en poids, et de préférence de 1% en poids rapportées au poids total du mélange de polyglycosides d'alkyles. Au titre des impuretés présentes dans les compositions de l'invention, on peut citer les alcools gras de formules ROH issus de la fabrication des polyglycosides d'alkyles et dans lesquelles R représente un radical aliphatique linéaire, avec
ou sans insaturation, ayant respectivement 4 à 14 atomes de carbone.

Les polyglycosides d'alkyles précités peuvent être préparés selon l'une des deux voies classiquement utilisées.

La première voie consiste à mettre directement en contact le sucre réducteur et l'alcool gras en présence d'un catalyseur acide pour obtenir les polyglycosides d'alkyles.

La seconde voie consiste, dans un premier temps, à réaliser la glycosidation avec un alcool court de formule RₐOH, Rₐ étant un radical alkyl ayant 2 à 5 atomes de carbone. Dans un second temps, on effectue une transglycosidation qui consiste à déplacer l'alcool court RₐOH par un alcool gras.

Les polyglycosides d'alkyles sont obtenus après neutralisation du catalyseur acide puis élimination complète des alcools gras en excès selon les techniques connues de l'homme de métier, comme par exemple, la distillation, la distillation sur film mince, la distillation moléculaire ou l'extraction par solvant.

Avantageusement, notamment si l'on travaille à partir de sucres réducteurs cristallisés, on préfère utiliser la première voie directe qui est plus rapide et facile à mettre en oeuvre. Cependant, lorsqu'on utilise des sucres réducteurs sous forme de sirop, notamment issus de l'hydrolyse de l'amidon
ou de l'hémicellulose des végétaux (selon FR 2 723 858 au nom de la demanderesse), il est préférable d'utiliser la seconde voie qui permet d'obtenir un milieu réactionnel plus homogène et par conséquent des polyglycosides d'alkyles de meilleure qualité, ne contenant pas ou peu de produits de dégradation.

Ensuite on mélange 80 à 100%, et de préférence 97 à 100% en poids par rapport au poids total des polyglycosides d'alkyles, de polypentosides d'alkyles, et de préférence de polyxylosides d'alkyles avec 0 à 20%, de préférence 0 à 3% en poids par rapport au poids total des polyglycosides d'alkyles, de polyhexosides d'alkyles, de préférence de polyglucosides d'alkyles en présence d'alcools gras ramifiés afin d'obtenir les émulsionnants de l'invention.

Les compositions à base de polyglycosides d'alkyles et d'alcools gras ramifiés conformes à la présente invention peuvent être utilisées, à titre d'émulsionnant principal, pour la préparation d'émulsions et de mini-émulsions fluides.

Ainsi, selon un deuxième aspect de l'invention, la présente demande vise à couvrir des émulsions et mini-émulsions fluides et vaporisables contenant une phase aqueuse et une phase huileuse et, à titre d'émulsionnant principal, une composition à base de polyglycosides d'alkyles et d'alcools gras telle que définie précédemment.

D'une façon générale, une telle émulsion comprendra de 0,1 à 95% en poids, de préférence de 0,5 à 50% en poids, de préférence encore de 1 à 15%, et de préférence encore 1 à 7% en poids de l'émulsionnant objet de la présente demande, jusqu'à 95%, de préférence de 2 à 50% et de préférence encore de 2 à 25% en poids d'une phase huileuse, jusqu'à 50% en poids d'une ou plusieurs matières actives et le reste étant constitué d'eau.

La phase huileuse de l'émulsion peut être constituée par le ou les alcools gras ramifiés présents dans la composition émulsionnante de l'invention sans qu'il ne soit nécessaire de mettre en oeuvre une autre huile. Mais d'une manière plus générale on utilisera une huile ou un mélange d'huiles, choisis sans l'intention de s'y limiter, parmi les huiles suivantes :
- Les huiles d'origine végétale, tels que l'huile d'amande douce, l'huile de coprah, l'huile de ricin, l'huile de jojoba, l'huile d'olive, l'huile de colza, l'huile de noisette, l'huile de palme, le beurre de karité, l'huile de noyau d'abricot, l'huile de calophylum, l'huile de carthame, l'huile d'avocat, l'huile de noix, l'huile de pépins de raisins, l'huile de germe de blé, l'huile de tournesol, l'huile de germe de maïs, l'huile de soja, l'huile de coton, l'huile de luzerne, l'huile d'orge, l'huile de pavot, l'huile de potimarron, l'huile de sézame, l'huile de seigle, l'huile d'onagre, l'huile de passiflore, des dérivés de ces huiles comme les huiles hydrogénées,
- Les huiles d'origine animale, comme l'huile de suif, l'huile de poissons,
- Les huiles minérales, telles que l'huile de paraffine, l'huile de vaseline et les huiles minérales notamment issues de coupes pétrolières,
- Les huiles synthétiques, comme les poly-α-oléfines,
- Les dérivés de la lanoline,
- Les alcanediols possédant de 2 à 10 atomes de carbone comme le 1,2 propanediol, le 1,3-butanediol,
- Les polyéthylène glycols ou polypropylène glycols,
- Les esters gras de formule R₆-O-CO-R₇ où R₆ et R₇ sont indépendamment l'un de l'autre des radicaux aliphatiques, saturés ou insaturés ayant 1 à 4 insaturations éthyléniques, linéaires ou ramifiées, ayant de 1 à 22 atomes de carbone, tels que les myristates d'alkyle notamment le myristate de butyle, le myristate de propyle ; les palmitates d'alkyle comme le palmitate d'isopropyle; les stéarates d'alkyle notamment le stéarate d'hexadécyle ; les oléates d'alkyle, notamment l'oléate de dodécyle ; les laurates d'alkyle, notamment le laurate d'hexyle ; le dicaprylate de propylène glycol ; le cocoate d'éthyl-2-hexyle ; les esters de l'acide lactique, de l'acide béhennique, de l'acide isostéarique tel que l'isostéarate d'isostéaryle ; les esters d'acides gras de colza, d'acides gras de tournesol, d'acides gras de lin, d'acides gras de coton, d'acides gras de soja,
- Et les huiles silicones regroupant les polydiméthylsiloxanes cycliques, les polydiméthylsiloxanes α-ω hydroxylées, les polydiméthylsiloxanes α-ω triméthylsilylés, les polyorganosiloxanes comme les polyalkylméthylsiloxanes, les polyméthylphénylsiloxanes, les dérivés aminés des silicones, les silicones copolyéthers ou les dérivés mixtes de silicones comme les copolymères mixtes polyalkylméthylsiloxanes-silicones copolyethers.

Les matières actives et les adjuvants présents dans les émulsions seront notamment ceux utilisés pour les préparations cosmétiques, pharmaceutiques et/ou phytosanitaires, lipophiles ou hydrophiles classiques. Parmi les actifs et les adjuvants susceptibles d'être contenus dans la phase aqueuse et/ou la phase grasse des émulsions, on peut citer sans l'intention de s'y limiter :
- les agents compatibilisants, comme les alcools courts en C2-C8, en particulier l'éthanol, les diols et glycols comme le diéthylène glycol, le dipropylène glycol,
- des agents hydratants ou humectants pour la peau comme le glycérol, le sorbitol, le collagène, la gélatine, l'aloe-vera, l'acide hyaluronique, l'urée ou des agents protecteurs de la peau, comme les protéines ou hydrolysats de protéine, les polymères cationiques, comme les dérivés cationiques du guar,
- les glycolipides tels que les sophoroses lipides,
- les poudres ou des particules minérales comme du carbonate de calcium, les oxydes minéraux sous forme de poudres ou sous formes colloïdales comme du dioxyde de titane, de la silice, des sels d'aluminium, du kaolin, du talc, les argiles et leurs dérivés,
- les agents conservateurs comme les méthyl, éthyl, propyl et butyl esters de l'acide p-hydroxybenzoïque, le benzoate de sodium, le GERMABEN^{®} ou tout agent chimique évitant la prolifération bactérienne ou des moisissures,
- les filtres solaires organiques actifs dans l'UV-A et/ou l'UV-B pour protéger la peau ou les cheveux des agressions du soleil et des rayons UV, comme les composés autorisés dans la directive européenne N°76/768/CEE, ses annexes et les modifications ultérieures de cette directive,
- les adoucissants, les antioxydants comme, les agents autobronzants comme la dihydroxyacétone (DHA),
- les agents répulsifs contre les insectes, comme l'acetamiprid, l'etofenprox, la permethrin, la cypermethrin,
- les actifs pharmaceutiques, comme les désinfectants tels que le gluconate de chlorexidrine, le chlorure de benzalkonium, l'acide benzoique, le chlorure de cetylpyridinium, les anti-inflammatoires comme la teinture d'arnica, l'eucalyptol, le menthol, le dimethoxy-1,2-benzène, les antiacnéiques comme les dérivés de la trétinoïde, l'acide azelaïque, les antifongiques comme les dérivés de la pyridone tel que le ciclopiroxolamine, les dérivés d'imidazole tel que le clotrimazole, les vitamines comme l'acide ascorbique, le rétinol, l'alpha-tocopherol, l'acide folique, la riboflavine.
- les parfums, les charges, les sequestrants comme l'acide mucique, l'acide phytique, l'EDTA, les colorants, les régulateurs de pH.

L'émulsionnant et l'émulsion ou mini-émulsion objets de la présente demande trouvent des applications dans le domaine de la cosmétique, la pharmacie, les traitements phytosanitaires ou insecticides, la détergence et notamment pour la fabrication de lingettes ou linge imprégnées.

### Cosmétique et dermatologique :

Les émulsions et mini-émulsions à l'usage de la cosmétique et des préparations dermatologiques contenant comme émulsionnant principale les compositions à base de polyglycosides d'alkyles et d'alcools gras ramifiés conformes à la présente invention peuvent être utilisées sous la forme de laits vaporisables. Elles seront utiles pour la préparation par exemple d'un spray de protection solaire contenant des filtres organiques comme la 2-hydroxy-4-méthoxy-benzophénone et/ou le méthoxycinnamate d'octyle, d'un spray après solaire contenant des agents apaisants comme le panthenol ou encore d'un spray auto-bronzant contenant de la DHA. Elles seront aussi utiles pour la préparation d'un lait lavant, décontractant, ou déodorant, comme par exemple, un spray pour le corps contenant des huiles essentielles, un spray pour le traitement des cheveux contenant des agents démêlants et/ou antipelliculaires, un spray démaquillant contenant des agents lavants et apaisants.

Les matières actives lipophiles, comme les huiles essentielles, les filtres solaires organiques, les antibactériens comme les esters des acides p-hydroxy benzoïque, les agents anti-rides comme les dérivés des benzofuranes, les antioxydants comme les hydroquinones ou le butylhydroxytoluène, seront incorporées dans la phase grasse contenant l'émulsionnant de l'invention et l'huile ou les huiles cosmétiques.

Les matières actives hydrophiles comme la DHA, les agents antimicrobiens comme les sels de zirconium, les ammoniums quaternaires, les agents anti-transpirants comme les chlorohydroxydes d'aluminium, les anti-pelliculaires comme les sophoroses lipides, les agents lavants comme les tensioactifs non-ioniques, anioniques, cationiques ou amphotères, les régulateurs de pH, les agents dépilatoires comme les sels d'acide thioglycolique, seront incorporées avec la phase aqueuse. L'émulsion est ensuite obtenue en mélangeant la phase aqueuse et la phase huileuse à une température comprise entre la température ambiante et 90 °C à l'aide d'un mélangeur apte à former des émulsions comme un système rotor-stator, un mélangeur à pâle, un mélangeur planétaire, un homogénéisateur haute pression ou un moulin colloïdal.

Dans le cas où les actifs lipophiles ou hydrophiles se dégradent rapidement avec l'élévation de la température, comme c'est le cas par exemple pour les vitamines, la DHA, l'acide ascorbique, l'émulsion se fabriquera à des températures inférieures à la température de dégradation de l'actif.

D'une façon générale, une telle émulsion comprendra de 1 à 15%, et de préférence 1 à 7% en poids de l'émulsionnant objet de la présente demande, de 2 à 50% et de préférence de 2 à 25% en poids de la phase huileuse, de 0,1 à 50% et de préférence 0,1 à 5% en poids d'une ou plusieurs matières actives et le reste étant constitué d'eau.

Les agents lavants, moussants ou détergents ioniques ou non ioniques susceptibles d'être utilisés dans les préparations lavantes peuvent être choisis sans l'intention de s'y limiter parmi les tensioactifs suivants :
- les alcanolamides comme les mono et di-alcanolamides tels que les diéthanolamides d'acides gras de coco,
- Les sels d'acides gras, comme les savons de sodium d'acide laurique, d'acide myristique, d'acide palmitique,
- les dérivés polyoxyethylénés, comme les alcools gras éthoxylénés tels que le Brij 35, le Brij 58, le Brij 97 ou le Brij 98 de UNIQUEMA, les acides gras éthoxylénés tels que le Myrj 49
ou le Myrj 59 de UNIQUEMA, les esters de sorbitanne éthoxylénés ou non éthoxylénés tels que le Tween 20, le Tween 40, le Tween 60 ou le Tween 80 de UNIQUEMA.
- Les alkylphénol polyéthoxylénés ,
- Les polyglycosides d'alkyles tels que Plantacare 1200 ou Plantacare 818UP de Cognis, les esters de saccharoses,
- Les sulfonates d'alkyl-aryle, les sulfates d'alkyles comme le lauylsulfate de sodium, les alkyl-éther sulfates tel que le lauryléther sulfate de sodium à 2 motifs éthoxylés, les alcools gras sulfatés,
- Les sulfosuccinates d'alkyles comme le sulfosuccinate de dioctyle,
- Les lipoamino-acides, les acylas de polypeptides, les phosphates d'alkyles,
- les alkylbétaïnes, les N-alkylamidobétaines comme les alkyles amidopropyl-betaine tel que la cocoamidopropyl betaine, les dérivés de l'imidazoline,
- Les sels d'ammonium quaternaires comme le bromure de cétyltriméthylammonium, les sels d'alkylpyridinium comme le chlorure de laurylpyridinium,

Les émulsions peuvent contenir en outre, en vue d'augmenter leurs qualités cosmétiques, une cire cosmétique telle que par exemple de la cire de riz, de la cire de candellila, de la cire du Japon, des épaississants et des gélifiants ioniques ou non ioniques, comme les dérivés de cellulose (carboxyméthylcellulose, hydroxyéthylcellulose), de guar (hydroxypropylguar, carboxyméthylguar, carboxyméthylhydroxypropylguar), de caroube, les exsudats d'arbres (gomme arabique, le karaya), les extraits d'algues marines (alginates, carraghénates), les exsudats de microorganismes (gomme de xanthane), des stabilisants comme les acides gras tels que l'acide stéarique ou l'acide palmitique, les esters d'acides gras tel que le stéarate de glycérol.

L'imprégnation des lingettes et des tissus.

Les lingettes imprégnées sont utilisées dans de très nombreuses applications notamment le lavage et le traitement de la peau, le nettoyage des petites pièces mécaniques ou le nettoyage ménager. Elles sont constituées de matériaux absorbants ou poreux sous la forme de tissus, linges, serviettes, mouchoirs ou papier. Elles sont généralement composées de fibres de cellulose, de fibres synthétiques comme des polymères tels que les polyesters ou les polypropylènes, ou du mélange de fibres naturelles et synthétiques. Les lingettes imprégnées servent par exemple pour la toilette des bébés, le nettoyage des mains ou du corps, le traitement de la peau, le démaquillage, l'application de lotion protectrice du soleil, la protection contre les insectes, le nettoyage des surfaces dures (sols, surface de cuisine ou de salle de bain, meubles) ou encore pour le détachage des vêtements.

Les tissus peuvent aussi être traités par aspersion d'une émulsion par exemple lors d'étape d'imperméabilisation, de traitement spécifique ou pour la fabrication de textile fonctionnel comme des moustiquaires imprégnées d'un insecticide (tel que décrit dans WO 0158261). L'avantage de l'utilisation d'une mini-émulsion par trempage, immersion ou aspersion est, du fait de l'extrême finesse des gouttelettes, l'augmentation de l'étalement du liquide sur le substrat et de meilleurs propriétés d'imprégnations notamment de capacité d'absorption et de rétention.

La masse surfacique des fibres tissés ou non tissés utilisées pour la fabrication des lingettes imprégnées varie généralement de 10 à 80 g/m² et plus généralement encore de 40 à 60g/m². La quantité d'émulsion imprégnée sur les lingettes varie de 50 à 400%, préférentiellement de 100 à 400%, exprimée en masse d'émulsion par rapport à la masse sèche de lingette traitée.

Les émulsions utiles pour la préparation des lingettes imprégnées ou le traitement des fibres textiles seront constituées d'une phase aqueuse pouvant contenir des actifs hydrosolubles, d'une phase huileuse constituée d'une ou plusieurs huiles pouvant contenir des actifs liposolubles et à titre d'émulsionnant principal, une composition à base de polyglycosides d'alkyles et d'alcools gras ramifiés objet de la présente invention. Les actifs hydrosolubles peuvent être à titre d'exemple, des agents lavants ou moussants tels que des tensioactifs non-ioniques, anioniques ou amphotères, des antibactériens comme le peroxyde d'hydrogène ou des ammoniums quaternaires, des agents hydratants comme le glycérol. Les actifs lipophiles peuvent être par exemple, des anti-inflammatoires comme des extraits de plantes, l'alpha-bisabolol, le panthénol, l'alpha-tocophérol, des anti-brûlures comme l'allantoïne, des anti-ages comme le rétinol, des insecticides comme ceux de la famille des pyrethroides telles que la permethrine et la cypermethrine.

L'émulsion ou la mini-émulsion peut être fabriquée avant l'imprégnation du tissu en mélangeant la phase aqueuse et la phase huileuse à une température comprise entre la température ambiante et 90 °C à l'aide d'un mélangeur apte à former des émulsions comme un système rotor-stator, un mélangeur à pâle, un mélangeur planétaire, un homogénéisateur haute pression ou un moulin colloïdal. D'une manière générale, l'émulsion comprendra de 1 à 15%, et de préférence 1 à 7% en poids de l'émulsionnant objet de la présente demande, de 2 à 50% et de préférence de 2 à 25% en poids de la phase huileuse, de 0,1 à 50% et de préférence 0,1 à 5% en poids d'une ou plusieurs matières actives et le reste étant constitué d'eau. L'émulsion ou la mini-émulsion peut aussi être préparée par dilution d'une émulsion concentrée ou encore d'un' concentré émulsionnable ne contenant pas ou très peu d'eau. D'une manière générale, l'émulsion concentrée comprendra de 1 à 25% en poids de l'émulsionnant objet de la présente demande, de 20 à 95% et de préférence de 20 à 70% en poids de la phase huileuse, de 0,1 à 50% et de préférence de 0,1 à 25% en poids d'une ou plusieurs matières actives et le reste étant constitué d'eau. L'émulsion concentrée sera préparée en mélangeant la phase aqueuse et la phase huileuse à une température comprise entre la température ambiante et 90°C à l'aide d'un mélangeur apte à former des émulsions.

L'émulsion concentrée sera ensuite diluée par un ajout d'une phase aqueuse supplémentaire pouvant contenir une ou plusieurs matières actives hydrophiles avant l'imprégnation du tissu.

### Applications phytosanitaires

Les compositions émulsionnantes de l'invention peuvent également être utilisées pour la préparation d'émulsions à l'usage des traitements phytosanitaires, soit avec l'incorporation d'une ou plusieurs matières actives agrochimiques, soit sans aucune matière biochimiquement active mais de manière à renforcer l'action des pesticides au moment de leur application aux champs. La première forme est habituellement nommée « Ready Mix » et la seconde « Tank Mix » par l'homme du métier. Les matières actives phytosanitaires peuvent être des herbicides, des fongicides et des insecticides, tels que ceux décrits dans THE PESTICIDE MANUAL (9° édition, C.R. WORKING et R.J HANCE, éditeurs, publié par The British Crop Protection Council).

Les émulsions à l'usage des traitements phytosanitaires peuvent contenir en plus, de l'émulsionnant objet de l'invention et des matières actives agrochimiques citées précédemment, des adjuvants de formulations tels que notamment :
- les tensioactifs mouillants, ioniques ou non ioniques, tels que ceux de la famille des organosiliconés comme Sylgard® de Dow Corning, Zipper® et Breakthru® S240 de Goldschmitt Chemical, ceux de la famille des organofluorés comme les Zonyl® de Dupont, les APG comme l'Agnique® PG 8105 ou PG 8107-U de Cognis, les alcools éthoxylés en C8 à C18, les alkyl-phénol éthoxylés en C8 à C16 comme le Triton® X114 de ICI, les amines grasses éthoxylées comme l'Agnique® TAM 15 de Cognis, les tristyryl phénol éthoxylés, les sucroesters, les sulfates d'alcools en C8 à C18, les alkyl benzène, toluène ou xylène sulfonates, les sulfates d'alkyl-phénol éthoxylés en C8 à C16, les phosphonates d'alkyl-phénol éthoxylés en C8 à C16,
- Les solvants ou huiles tels que les huiles végétales, les esters d'acides gras végétaux comme l'ester méthylique de colza ou l'oléate de méthyle, les huiles minérales comme les huiles paraffines, les huiles aromatiques d'origine pétrolière, le xylène, les alcools, les cétones, le DMF, la N-méthyl pyrrolidone, la N-octyl pyrrolidone,
- Les polymères et mélanges de polymères tels que les copolymères oxydes de polydiméthyl-siloxane-alkylés, les polymères blocks de phényl-éthoxylé/propoxylé alkylés, les polyvinyl-pyrrolidones alkylés, les gommes de xanthane, les carboxyméthylcelluloses, les alginates,
- Les agents conservateurs comme les méthyl, éthyl, propyl et butyl ester de l'acide p-hydroxybenzoïque, le benzoate de sodium, le GERMABEN^{®}, KATHON^{®} MK de Rohm et Haas ou tout agent chimique évitant la prolifération bactérienne ou des moisissures,
- Les antimousses tels que les polysiloxanes SE2, SE9 ou SE25 de WACKER.

Les adjuvants « tank-mix » contiendront des matières inertes du point de vue agrochimique mais permettant de renforcer l'action des pesticides ou de réduire leurs doses, en augmentant par exemple l'étalement de la bouillie herbicide sur les feuilles ou les insectes, en renforçant la pénétration des actifs à travers la membrane cuticulaire, en limitant les phénomènes de rebond ou de dérive au vent. D'une manière générale, l'émulsion comprendra de 1 à 15%, et de préférence 1 à 7% en poids de l'émulsionnant objet de la présente demande, de 2 à 95% et de préférence de 2 à 75% en poids de la phase huileuse constituée d'une ou plusieurs huiles ou solvants, jusqu'à 50% et de préférence 0,1 à 15% en poids de tensioactifs mouillants, jusqu'à 5% et de préférence de 0,01 à 0,5% d'agents antimousse, jusqu'à 5% et de préférence de 0,005 à 0,5% en poids de polymères, et le reste étant constitué d'eau.

Les formulations « ready-mix » seront, d'une manière générale, composées de 1 à 95%, et de préférence de 5 à 50% et de préférence encore de 10 à 35% en poids d'un ou plusieurs pesticides, de 1 à 25%, et de préférence 1 à 15% en poids de l'émulsionnant objet de la présente demande, de 2 à 95% et de préférence de 10 à 75%, et de préférence encore de 10 à 40% en poids de la phase huileuse constituée d'une ou plusieurs huiles ou solvants, jusqu'à 50% et de préférence 0,1 à 15% en poids de tensioactifs mouillants, jusqu'à 5% et de préférence de 0,01 à 0,5% d'agents antimousse, jusqu'à 5% et de préférence de 0,005 à 0,5% en poids de polymères et le reste étant constitué d'eau.

L'émulsion ou la mini-émulsion peut être fabriquée en mélangeant la phase aqueuse et la phase huileuse à une température comprise entre la température ambiante et 90 °C à l'aide d'un mélangeur apte à former des émulsions comme un système rotor-stator, un mélangeur à pâle, un mélangeur planétaire, un homogénéisateur haute pression ou un moulin colloïdal.

Les émulsions et les mini-émulsions objets de la présente invention, peuvent être fabriquées soit en mélangeant directement les ingrédients solides ou liquides à une température comprise entre la température ambiante et 90°C et en homogénéisant la préparation par une agitation vigoureuse ou à l'aide d'un homogénéisateur haute pression, soit en préparant indépendamment les phases lipophiles et hydrophiles à une température comprise entre la température ambiante et 90°C et en homogénéisant la préparation en ajoutant l'une des phases sur l'autre sous agitation.

Selon un autre aspect de l'invention, une méthode avantageuse de préparation des mini-émulsions contenant la composition décrite auparavant consiste à solubiliser, soit à température ambiante soit à une température inférieure ou égale à 90°C, l'émulsionnant de l'invention avec la phase huileuse de manière à obtenir un mélange homogène puis à ajouter lentement sous agitation mécanique, de 500 à 15000 tours par minute et de préférence de 1000 à 2000 tours par minute, la phase aqueuse.

L'un des aspects de la présente invention concerne la préparation de concentrés émulsionnables. La demanderesse a en effet découvert que la composition de polyglycosides d'alkyles et d'alcools gras de l'invention était soluble dans les huiles, notamment les huiles cosmétiques et les huiles essentielles. Feront donc partie de la présente demande les compositions anhydres ou contenant moins de 2% en poids d'eau et comprenant :
- de 5 à 99% en poids d'une phase huileuse constituée d'une ou plusieurs huiles, et
- de 1 à 95% en poids des émulsionnants de l'invention.

Parmi les huiles utilisables dans le cadre de la présente préparation huileuse, on peut citer, sans l'intention de s'y limiter, les huiles suivantes :
- Les huiles d'origine végétale, telles que l'huile d'amande douce, l'huile de coprah, l'huile de ricin, l'huile de jojoba, l'huile d'olive, l'huile de colza, l'huile de noisette, l'huile de palme, le beurre de karité, l'huile de noyau d'abricot, l'huile de calophylum, l'huile de carthame, l'huile d'avocat, l'huile de noix, l'huile de pépins de raisins, l'huile de germe de blé, l'huile de tournesol, l'huile de germe de maïs, l'huile de soja, l'huile de coton, l'huile de luzerne, l'huile d'orge, l'huile de pavot, l'huile de potimarron, l'huile de sézame, l'huile de seigle, l'huile d'onagre, l'huile de passiflore, des dérivés de ces huiles comme les huiles hydrogénées,
- Les huiles essentielles de lavande, thym, sarriette, sauge, menthe, cumin, carvi, anis vert, fenouil, aneth, eucalyptus, cajeput, niaouli, girofle, pin, cèdre, cyprès, genévrier, citron, orange, bergamote, cannelle, laurier, camomille.
- Les huiles d'origine animale, comme l'huile de suif, l'huile de poissons,
- Les huiles minérales, telles que l'huile de paraffine, l'huile de vaseline et les huiles minérales notamment issues de coupes pétrolières,
- Les huiles synthétiques, comme les poly-α-oléfines,
- Les dérivés de la lanoline,
- Les alcanediols possédant de 2 à 10 atomes de carbone comme le 1,2 propanediol, le 1,3-butanediol,
- Les alcools de formules R₅OH où R₅ est un radical aliphatique, saturé ou insaturé ayant 1 à 4 insaturations éthyléniques, linéaire ou ramifié, ayant 12 à 22 atomes de carbone, tels que l'alcool myristique, l'alcool cétylique, l'alcool stéarique, l'alcool oléique,
- Les polyéthylène glycols ou polypropylène glycols,
- Les esters gras de formule R₆-O-CO-R₇ où R₆ et R₇ sont indépendamment l'un de l'autre des radicaux aliphatiques, saturés ou insaturés ayant 1 à 4 instaurations éthyléniques, linéaires ou ramifiés, ayant de 1 à 22 atomes de carbone, tels que les myristates d'alkyles notamment le myristate de butyle, le myristate de propyle, les palmitates d'alkyle comme le palmitate d'isopropyl, les stéarates d'alkyle notamment les stéarate d'hexadécyle, les oléates d'alkyle, notamment l'oléate de dodécyle, les laurates d'alkyle, notamment le laurate d'hexyle, le dicaprylate de propylène glycol, le cocoate d'éthyl-2-hexyle, les esters de l'acide lactique, de l'acide béhennique, de l'acide isostéarique tel que l'isostéarate d'isostéaryle, les esters d'acides gras de colza, d'acides gras de tournesol, d'acides gras de lin, d'acides gras de coton, d'acides gras de soja,
- Et les huiles silicones regroupant les polydiméthylsiloxanes cycliques, les polydiméthylsiloxanes α-ω hydroxylées, les polydiméthylsiloxanes α-ω triméthylsilylés, les polyorganosiloxanes comme les polyalkylméthylsiloxanes, les polyméthylphénylsiloxanes, les polydiohénilsiloxanes, les dérivés aminés des silicones, les silicones copolyéthers ou les dérivés mixtes de silicones comme les copolymères mixtes polyalkylméthylsiloxanes-silicones copolyéthers.

Bien entendu, les compositions huileuses, objet du présent aspect de l'invention, peuvent contenir également une ou plusieurs matières actives lipophiles, telles que celles utilisées dans les secteurs de la cosmétique, de la pharmacie, de la détergence, des traitements phytosanitaires ou insecticides telles qu'elles ont été décrites auparavant.

Les concentrés émulsifiables objet de la présente demande seront utile, par exemple, dans le domaine de la cosmétique afin de préparer des huiles parfumées décontractantes pour le bain, des solutions lavantes enrichies en agents hydratants pour la toilette des bébés, d'huiles pour le traitement des cheveux, d'huiles enrichies en agents apaisants pour la protection du soleil ou des préparations pour le rasage.

La composition anhydre huileuse selon l'un des aspects de la présente demande permet de former facilement une émulsion huile dans eau par simple dilution de ladite composition dans la phase aqueuse. Ces émulsions comprennent généralement de 1 à 95% en poids de ladite composition anhydre, le reste étant constitué d'eau et de matières actives hydrophiles usuellement utilisées dans les secteurs d'applications visées. De telle émulsions serviront par exemple à la fabrication de lingettes imprégnées.

Conformément à la présente invention, les émulsionnants constitués de polyglycosides d'alkyles et d'alcools gras ainsi que les concentrés émulsionnables précédemment décrits sont stables, liquides et limpides.

Les stabilités desdites compositions sont évaluées en observant les mélanges à 4, 20 et 45°C pendant trois mois. Les compositions sont jugées stables si l'on n'observe aucun trouble, aucun déphasage ni aucune cristallisation au sein du mélange. La limpidité desdites compositions est évaluée en effectuant une mesure d'absorption d'un faisceau lumineux à 600 nm à travers une cuve de 1 cm. Les mélanges sont jugés limpides si l'absorbance est inférieure à 0,01 par rapport à une cuve de référence contenant de l'eau. La viscosité des émulsionnants en centipoises (cps) est mesurée à 20°C à l'aide d'un viscosimètre Brookfield DTDV II muni d'un cylindre N°63 et à une vitesse de 12 tours par minute.

De la même manière, les émulsions, objet de la présente demande, sont stables, liquides et fines.

La stabilité des émulsions préparées sera évaluée en mesurant la résistance des préparations après une centrifugation à 4080G pendant 30min à l'aide d'une centrifugeuse Jouan GR 4-22, en déterminant le pourcentage d'huile et d'eau relargué ainsi que le pourcentage de crémage par rapport au volume total d'émulsion. Une préparation sera jugée stable si le volume d'huile relarguée est inférieur à 1%, la quantité d'eau relarguée inférieure à 5% et le volume de crème ne dépasse pas 5% du volume total. Dans les exemples suivants, les résultats du test de centrifugation sont notés ( A%, B%, C%), A% représente le pourcentage d'eau relarguée, B% le pourcentage de crème et C% le pourcentage d'huile relarguée par rapport au volume total.

La finesse des émulsions préparées sera jugée en déterminant le profil granulométrique grâce à un granulomètre laser de marque Malvem de type Mastersizer 2000. La méthode est basée sur la relation de proportion inverse entre l'angle de diffraction du faisceau laser sur la matière et la taille des particules dispersées. L'instrument est constitué d'une part d'un laser donnant une source de lumière cohérente de longueur d'onde fixe de 0,63 micromètre et d'autre part d'une série de détecteurs. Entre le laser et les détecteurs on place une cellule de mesure dans laquelle circule l'émulsion diluée de manière à avoir entre 10 et 30% de taux d'obscuration. L'instrument utilise la théorie de Mie qui permet de résoudre complètement l'équation de l'interaction de la lumière avec la matière et donne le volume de la particule. La granulométrie des émulsions est déterminée en mesurant le volume moyen équivalent ou encore appelé le diamètre moyen de De Brouckere et désigné par D[4,3], avec un modèle sphérique pour l'analyse informatique des résultats avec 1,33 comme indice de réfraction du dispersant (l'eau) et 1,52 l'indice de réfraction du dispersé (l'huile).

La viscosité est déterminée par un rhéomètre TA INSTRUMENT MA 2000, à 20°C en mesurant la contrainte de l'échantillon placé entre un cône de 6cm de diamètre et le plateau de l'instrument (avec un gap égal à 115 □m) en fonction de la vitesse de cisaillement (entre 0,1 et 100 s⁻¹).

L'invention sera illustrée plus en détail par les exemples suivants, donnés uniquement à titre illustratif et dans lesquels les caractéristiques des produits obtenus sont évalués selon les critères décrits ci-dessus.

### Exemple 1

### Procédé de préparation de polyxylosides d'alkyles et d'alcool gras selon l'invention

Dans un réacteur polyvalent, on mélange à 90°C, 450g de polyxyloside d'octyle, 150g de polyxylosides de décyle, 150g de polyxylosides de dodécyle et 750g d'ISOFOL^{®}16 (2-hèxyl-décanol) de la société SASOL. Après refroidissement, on obtient 1500g d'un mélange limpide et stable.

| | |
|---|---|
| Caractéristiques: | - Liquide limpide jaunâtre |
| | - Stabilité supérieure à 3 mois (4°C/20°C/45°C) |
| | - Viscosité = 250 cps (20°C). |

### Exemple 2

### Procédé de préparation de polyxylosides d'alkyles et d'alcool gras selon l'invention

Dans un réacteur polyvalent, 300g de D-xylose sont mélangés dans 275,3g d'octanol, 80,8g de décanol et 80,8g de dodécanol acidifiés par de l'acide sulfurique. Le milieu réactionnel est maintenu sous pression réduite (50 à 70 mbars) pendant 3 heures à 90°C. Après filtration et neutralisation de l'acidité du milieu par de la soude aqueuse jusqu'à pH 8 à 9, on obtient 711,6g de polyxylosides d'alkyles et d'alcools gras (31 %). L'excès d'alcools gras est ensuite évaporé grâce à un évaporateur couche mince à 190°C sous 1 mbar.
243g des polyxylosides d'alkyle ainsi obtenus sont ensuite mélangés dans 250g de 2-hexyl 1-decanol (ISOFOL^{®} 16 de SASOL). Après décoloration par de l'eau oxygénée, on obtient finalement une composition limpide et stable contenant :

| |
|---|
| 30,5 % de polyxylosides d'octyle |
| 9,2 % de polyxylosides de décyle |
| 9,5 % de polyxylosides de dodécyle |
| 50,8 % d'ISOFOL^{®} 16 |

| | |
|---|---|
| Caractéristiques: | - Liquide limpide jaunâtre |
| | - Stabilité supérieure à 3 mois |
| | (4°C/20°C/45°C) |
| | - Viscosité = 500 cps (20°C). |

### Exemple 3

### Procédé de préparation de polyxylosides d'alkyles et d'alcool gras selon l'invention

Dans un réacteur polyvalent, 300g de D-xylose sont mélangés dans 436,9g d'alcools gras 8/10 D de la société SASOL acidifiés par de l'acide sulfurique. Le milieu réactionnel est maintenu sous pression réduite (50 à 70 mbars) pendant 3 heures à 90°C. Après filtration et neutralisation de l'acidité du milieu par de la soude aqueuse jusqu'à pH 8 à 9, on obtient 703,2g de polyxylosides d'alkyles et d'alcools gras. L'excès d'alcools gras est ensuite évaporé grâce à un évaporateur couche mince à 190°C sous 1 mbar.
150g des alkylpolyxylosides ainsi obtenus sont ensuite mélangés dans 150g de 2-hexyl 1-décanol (ISOFOL^{®} 16 de SASOL). Après décoloration par de l'eau oxygénée, on obtient finalement une composition limpide et stable contenant essentiellement :

| |
|---|
| 22,5 % de polyxylosides d'octyle |
| 27,5 % de polyxylosides de décyle |
| 50,0 % d'ISOFOL^{®} 16 |

| | |
|---|---|
| Caractéristiques : | - Liquide limpide jaunâtre |
| | - Stabilité supérieure à 3 mois |
| | (4°C/20°C/45°C) |
| | - Viscosité = 420 cps (20°C). |

### Exemple 4

### Procédé de préparation de polyxylosides d'alkyles et d'alcool gras selon l'invention

150g de polyxylosides d'alkyles tels que ceux obtenus à l'exemple 2 sont mélangés dans 150g d'ISOFOL^{®} 14T de la société SASOL (mélange de 2-butyl-1-octanol, 2-hexyl-1-octanol, 2-butyl-1-décanol, 2-hexyl-1-décanol). Après décoloration par de l'eau oxygénée, on obtient finalement une composition liquide, limpide et stable, contenant :

| |
|---|
| 30,1 % de polyxylosides d'octyle |
| 9,3 % de polyxylosides de décyle |
| 10,6 % de polyxylosides de dodécyle |
| 50,0 % d'ISOFOL^{®} 14T. |

| | |
|---|---|
| Caractéristiques : | - Liquide limpide jaune pâle |
| | - Stabilité supérieure à 3 mois |
| | (4°C/20°C/45°C) |
| | - Viscosité = 230 cps (20°C). |

### Exemple 5

### Procédé de préparation de polyglycosides d'alkyles et d'alcool gras selon l'invention

350g de sirop, issus de la désamidation et de l'hydrolyse du son de blé, contenant 87,5g d'eau, 141,8g de D-xylose, 81,4g de L-arabinose, 18,4g de D-glucose et 20,9g d'oligosaccharides sont ajoutés goutte à goutte en 1 heure 30 dans 471 g de n-butanol acidifié par de l'acide sulfurique et contenant 25g d'eau, à une température comprise entre 100 et 107°C. L'eau est éliminée au cours de la réaction par distillation azéotropique du mélange eau/butanol. Le mélange réactionnel est ensuite ajouté goutte à goutte en 1 heure 30 dans 480g d'alcools gras acidifiés (302,4g d'octanol, 88,8g de décanol, 88,8g de dodécanol) à une température de 90°C. Le butanol est éliminé sous pression réduite en continu pendant l'addition. Après neutralisation de l'excès d'acide par de la soude aqueuse (30,5%) à pH 8, les alcools gras en excès sont évaporés sur évaporateur couche mince. Sur 100g de tensioactifs ainsi obtenus, on ajoute, à 90°C, 100g de 2-hexyl 1-décanol (ISOFOL^{®} 16 de SASOL). Après décoloration par de l'eau oxygénée on obtient une composition liquide, limpide et stable, contenant :

| |
|---|
| 30,0 % de polyglycosides d'octyle, |
| 10,1 % de polyglycosides de décyle, |
| 9,9 % de polyglycosides de dodécyle, |
| 50,0 % d'ISOFOL^{®} 16. |

| | |
|---|---|
| Caractéristiques: | - Liquide limpide jaune - orange |
| | - Stabilité supérieure à 3 mois |
| | (4°C/20°C/45°C) |
| | - Viscosité = 500 cps (20°C). |

### Exemple 6

### Procédé de préparation de polyglycosides d'alkyles et d'alcool gras selon l'invention

350g de sirop, issu de l'hydrolyse de la paille de blé et contenant 87,75g d'eau, 191,4g de D-xylose, 34,1g de L-arabinose, 18,3g de D-glucose et 18,45g d'oligosaccharides sont ajoutés goutte à goutte en 1 heure 30 dans 471 g de n-butanol acidifié par de l'acide sulfurique et contenant 25g d'eau, à une température comprise entre 100 et 107°C. L'eau est éliminée au cours de la réaction par distillation azéotropique du mélange eau/butanol. Le mélange réactionnel est ensuite ajouté goutte à goutte en 1 heure 30 dans 480g d'alcools gras acidifiés (302,4g d'octanol, 88,8g de décanol, 88,8g de dodécanol) à une température de 90°C. Le butanol est éliminé sous pression réduite en continu pendant l'addition. Après neutralisation de l'excès d'acide par de la soude aqueuse (30,5%) à pH 8, les alcools gras en excès sont évaporés sur évaporateur couche mince. Sur 100g de tensioactifs ainsi obtenus on ajoute, à 90°C, 100g de 2-hexyl 1-décanol (ISOFOL^{®} 16 de SASOL). Après décoloration par de l'eau oxygénée on obtient une composition liquide, limpide et stable, contenant :

| |
|---|
| 29,8 % de polyglycosides d'octyle, |
| 10,3 % de polyglycosides de décyle , |
| 9,9 % de polyglycosides de dodécyle , |
| 50,0 % d'ISOFOL^{®} 16. |

| | |
|---|---|
| Caractéristiques: | - Liquide limpide jaune - orange |
| | - Stabilité supérieure à 3 mois |
| | (4°C/20°C/45°C) |
| | - Viscosité = 450 cps (20°C). |

### Exemple 7

### Mise en évidence du pouvoir émulsionnant des compositions de l'invention.

- Préparation des émulsions à chaud.
On recherche la quantité minimale nécessaire pour obtenir une émulsion parfaitement stable selon les critères établis précédemment et contenant 50% de phase grasse. Les émulsions sont préparées en mélangeant l'ensemble des ingrédients à 75°C sous agitation (2000 tours par minute / Polytron) pendant 2 minutes, puis mises à refroidir jusqu'à température ambiante. On utilise la composition de l'exemple 2 comme agent émulsionnant de l'invention.
Les résultats ainsi obtenus sont mentionnés dans le tableau I :

**Tableau I**

| Huiles | Fournisseurs | % d'émulsionnant minimal |
|---|---|---|
| Huile de Paraffine | Markol 82 - ESSO | 8,0 % |
| caprylic-/capric acid triglycerides | Miglyol 812N - Hüls | 5,0 % |
| Cyclopenta siloxane | Cyclométhicone - Brentag | 4,0% |
| dimethyl polysiloxane | Diméthicone 200SF - Brentag | 7,0% |
| Triglycérides d'acides gras | Huile de Tournesol alimentaire | 7,5% |
| Isostearate d'isostéaryle | Gattefossé | 6,0% |

- Préparation des émulsions à froid.
On recherche la quantité minimale nécessaire pour obtenir une émulsion parfaitement stable contenant 50% de phase grasse selon les critères établis précédemment. Les émulsions sont préparées à température ambiante en mélangeant l'ensemble des ingrédients sous agitation (2000 tours par minute / Polytron) pendant 2 minutes. On utilise la composition de l'exemple 2 comme agent émulsionnant de l'invention.
Les résultats ainsi obtenus sont mentionnés dans le tableau II :

**Tableau II**

| Huiles | Fournisseurs | % d'émulsionnant minimal |
|---|---|---|
| Huile de Paraffine | Markol 82 - ESSO | 8,0 % |
| caprylic-/capric acid triglycerides | Miglyol 812N - Hüls | 6,0% |
| Cyclopenta siloxane | Cyclométhicone - Brentag | 4,5 % |
| diméthyle polysiloxane | Dimethicone 200SF - Brentag | 7,0 % |
| Triglycérides d'acides gras | Huile de Tournesol alimentaire | 7,5 % |
| Isostearate d'isostéaryle | Gattefossé | 6,5 % |

### Exemple 8

### Mise en évidence des méthodes d'obtention des mini-émulsions selon l'invention.

5% de l'agent émulsionnant de l'exemple 2 servent à la fabrication de mini-émulsions contenant 15% de Cyclométhicone (Brentag). Les méthodes de préparation sont les suivantes :
• Méthode 1 (one pot) : 1,0g d'émulsionnant de l'exemple 2, 3,0g de Cyclométhicone (Brentag) et 16,0g d'eau osmosée sont pesés ensemble dans un récipient. Le mélange est ainsi homogénéisé sous agitation mécanique (2000 tours par minute / 2 min / Polytron) à 75°C.
• Méthode 2 (direct) : 1,0g d'émulsionnant de l'exemple 2 et 3,0g de Cyclométhicone (Brentag) sont pesés dans un récipient puis chauffés à 75°C. A part, 16,0g d'eau osmosée sont chauffés à 75°C. Sous agitation mécanique (2000 tours par minute / Polytron) le mélange huileux est versé sur l'eau en deux minutes.
• Méthode 3 (inversion de phase) : 1,0g d'émulsionnant de l'exemple 2 et 3,0g de Cyclométhicone (Brentag) sont pesés dans un récipient puis chauffés à 75°C. A part 16,0g d'eau osmosée sont chauffés à 75°C. Sous agitation mécanique (2000 tours par minute / Polytron) l'eau est versée sur le mélange huileux.
• Méthode 4 (inversion de phase à froid) : 1,0g d'émulsionnant de l'exemple 2 et 3,0g de Cyclométhicone (Brentag) sont pesés dans un récipient. A part 16,0g d'eau osmosée sont pesés dans un récipient. Sous agitation mécanique (2000 tours par minute / Polytron) l'eau est versée sur le mélange huileux à la température du laboratoire.
On obtient dans chacun des cas des émulsions bleutées à blanchâtres, fluides et stables selon les critères définis précédemment. Les granulométries des émulsions sont présentées dans le tableau III :

**Tableau III.**

| **Méthodes** | **D [4,3]** |
|---|---|
| Méthode 1 | 0,3 µm |
| Méthode 2 | 0,8 µm |
| Méthode 3 | 0,2 µm |
| Méthode 4 | 0,8 µm |

### Exemple 9.

### Exemple de mini-émulsion selon l'invention.

1,2g d'émulsionnant de l'exemple 4 sont mélangés dans 2g de Cyclométhicone (Brentag), 0,4g de Miglyol 812N (Hüls) et 0,06g de Phénonip^{®} (Clariant). A part, on pèse 13,34g d'eau osmosée. L'ensemble des ingrédients est chauffé à 75°C pendant 20 minutes. Sous agitation mécanique (2000 tours par minute / Polytron) la phase aqueuse est ajoutée sur la phase huileuse en 2 minutes. Après refroidissement, on obtient une mini-émulsion bleutée, fluide et stable selon les critères établis précédemment.

### Exemple 10.

### Exemple de mini-émulsion selon l'invention.

1,2g d'émulsionnant de l'exemple 5 sont mélangés dans 2g de Cyclométhicone (Brentag), 0,4g de Miglyol 812N (Hüls) et 0,06g de Phénonip^{®} (Clariant). A part, on pèse 13,34g d'eau osmosée. L'ensemble des ingrédients est chauffé à 75°C pendant 20 minutes. Sous agitation mécanique (2000 tours par minute / Polytron) la phase aqueuse est ajoutée sur la phase huileuse en 2 minutes. Après refroidissement, on obtient une min-iémulsion bleutée, fluide et stable selon les critères établis précédemment.

### Exemple 11.

### Exemple de mini-émulsion selon l'invention.

1,2g d'émulsionnant de l'exemple 6 sont mélangés dans 2g de Cyclométhicone (Brentag), 0,4g de Miglyol 812N (Hüls) et 0,06g de Phénonip ® (Clariant). A part on pèse 13,34g d'eau osmosée. L'ensemble des ingrédients est chauffé à 75°C pendant 20 minutes. Sous agitation mécanique (2000 tours par minute / Polytron) la phase aqueuse est ajoutée sur la phase huileuse en 2 minutes. Après refroidissement, on obtient une mini-émulsion bleutée, fluide et stable selon les critères établis précédemment.

### Exemple 12.

### Formulation d'un spray pour le corps.

La formule est la suivante :

| | | |
|---|---|---|
| Phase A | - Emulsionnant de l'exemple 2 | 6,0% |
| | - Cyclométhicone (Brentag) | 10,0% |
| | - Miglyol 812N (Hüls) | 2,0% |
| | - Stéarate de glycerol (Interchimie) | 0,3 % |
| | - Phénonip (Clariant) | 0,2 % |
| Phase B | - Glycérol | 2,0% |
| | - Menthol (Labosi) | 0,2% |
| | - Eau osmosée | qsp 100% |

Les phases A et B sont chauffées à 75°C pendant 20 minutes. Sous agitation mécanique (2000 tours par minute / Polytron) la phase B est ajoutée sur la phase A en 2 minutes. Après refroidissement, on obtient une mini-émulsion bleutée, fluide et stable selon les critères établis précédemment.

| | | | |
|---|---|---|---|
| Caractéristiques de l'émulsion: | Aspect | = | Mini-émulsion |
| | Viscosité | = | < 10 cps (20°c). |
| | pH | = | 6,3 |
| | Stabilité | = | (0%,0%,0%) |
| | D[4,3] | = | 0,2 µm. |

### Exemple 13.

### Formulation d'un spray démaquillant.

La formule est la suivante :

| | | | |
|---|---|---|---|
| Phase A | - Emulsionnant de l'exemple 6 | | 6,0% |
| | - Cyclométhicone (Brentag) | | 6,0% |
| | - Markol 82 (Esso) | | 6,0% |
| | - Isopropyl Myristate (Oleon) | | 2,0 % |
| | - Huiles essentielles | Amande douce | 0,2 % |
| | | Thym | 0,1% |
| | | | |
| | | Pépin de raisin | 0,1% |
| | - Allantoïne (ICI) | | 0,5 % |
| | - Phénonip (Clariant) | | 0,2 % |
| Phase B | - Glycérol | | 3,0% |
| | - Eau osmosée | | qsp 100% |

Les phases A et B sont préparées indépendamment à 70°C. Sous agitation mécanique (2000 tours par minute / Polytron) la phase B est ajoutée sur la Phase A en 2 minutes. Après une période de repos (15h à 20°C), on obtient une mini-émulsion bleutée, fluide et stable selon les critères établis précédemment.

| | | | |
|---|---|---|---|
| Caractéristiques de l'émulsion: | Aspect | = | Mini-émulsion |
| | Viscosité | = | < 10 cps (20°C). |
| | pH | = | 5,3 |
| | Stabilité | = | (0%,0%,0%) |
| | D[4,3] | = | 0,4 µm. |

### Exemple 14.

### Formulation d'un spray solaire.

La formule est la suivante :

| | | |
|---|---|---|
| Phase A | - Emulsionnant de l'exemple 2 | 6,0% |
| | - Cyclométhicone (Brentag) | 10,0% |
| | - Benzophenone-3 (Acros) | 3,5 % |
| | - Octinamate (Acros) | 6,0 % |
| | - Phénonip (Clariant) | 0,3 % |
| Phase B | - Glycérol | 3,5% |
| | - Eau osmosée | qsp 100% |

Les phases A et B sont chauffées à 75°C pendant 20 minutes. Sous agitation mécanique (2000 tours par minute / Polytron) la phase B est ajoutée sur la phase A en 2 minutes. Après refroidissement, on obtient une mini-émulsion bleutée, fluide et stable selon les critères établis précédemment.

| | | | |
|---|---|---|---|
| Caractéristiques de l'émulsion : | Aspect | = | Mini-émulsion |
| | Viscosité | = | < 10 cps (20°C), |
| | pH | = | 5,8 |
| | Stabilité | = | (0%,0%,0%) |
| | D[4,3] | = | 0,3 µm. |

### Exemple 15.

### Formulation d'un spray pour l'imprégnation des lingettes.

La formule est la suivante:

| | | |
|---|---|---|
| Phase A - | Emulsionnant de l'exemple 2 | 8,0 % |
| | - Cyclométhicone (Brentag) | 10,0% |
| | - Huile d'amande douce | 1,0 % |
| | - Huile de Jojoba | 1,0 % |
| | - Huile essentielle de Menthe | 0,2 % |
| | - Phénonip (Clariant) | 0,2 % |
| Phase B | - Glycérol | 5,0% |
| | - Eau osmosée | qsp 100% |

Les phases A et B sont préparées indépendamment à température ambiante. Sous agitation mécanique (2000 tours par minute / Polytron) la phase B est ajoutée sur la phase A en 2 minutes. Après une période de repos, on obtient une mini-émulsion blanchâtre, fluide et stable selon les critères établis précédemment.

| | | | |
|---|---|---|---|
| Caractéristiques de l'émulsion : | Aspect | = | Mini-émulsion |
| | Viscosité | = | < 10 cps (20°C) |
| | pH | = | 5,8 |
| | Stabilité | = | (0%,0%,0%) |
| | D[4,3] | = | 0,9 µm. |

### Exemple 16.

### Formulation d'un spray insecticide.

La formule est la suivante :

| | | |
|---|---|---|
| Phase A | - Emulsionnant de l'exemple 2 | 7,0% |
| | - Cyclométhicone (Brentag) | 6,0% |
| | - Markol 82 (Esso) | 6,0 % |
| | - Myristate d'isopropyle (Oleon) | 2,0 % |
| | - Etofenprox (Mitsui chem.) | 10,0 % |
| Phase B | - Eau osmosée | qsp 100% |

Les phases A et B sont chauffées à 75°C pendant 20 minutes. Sous agitation mécanique (2000 tours par minute / Polytron) la phase B est ajoutée sur la phase A en 2 minutes. Après refroidissement, on obtient une mini-émulsion bleutée, fluide et stable selon les critères établis précédemment.

| | | | |
|---|---|---|---|
| Caractéristiques de l'émulsion : | Aspect | = | Mini-émulsion |
| | Viscosité | = | 30 cps (20°C) |
| | pH | = | 6,0 |
| | Stabilité | = | (0%,0%,0%) |
| | D[4,3] | = | 0,7 µm. |

### Exemple 17.

### Formulation d'une mini-émulsion phytosanitaire (tank-mix)

La formule est la suivante :

| | | |
|---|---|---|
| Phase A | - Emulsionnant de l'exemple 5 | 10,0% |
| | - Ester méthylique de colza (Oleon) | 23,0% |
| | - Stéarate de glycerol (Interchimie) | 0,3 % |
| | - Phénonip (Clariant) | 0,2 % |
| Phase B | - Agrisurtactant S 8/10 (ARD) | 5,0 % |
| | - Eau osmosée | qsp 100% |

Les phases A et B sont chauffées à 75°C pendant 20 minutes. Sous agitation mécanique (2000 tours par minute / Polytron) la phase B est ajoutée sur la phase A en 2 minutes. Après refroidissement, on obtient une mini-émulsion bleutée, fluide et stable selon les critères établis précédemment.

| | | | |
|---|---|---|---|
| Caractéristiques de l'émulsion : | Aspect | = | Mini-émulsion |
| | Viscosité | = | < 10 cps (20°C) |
| | pH | = | 6.0 |
| | Stabilité | = | (0%,0%,0%) |
| | D[4,3] | = | 0,2 µm. |

### Exemple 18.

### Formulation d'un concentré émulsionnable pour la fabrication de lingettes imprégnées.

La formule est la suivante :

| | |
|---|---|
| - Emulsionnant de l'exemple 6 | 20,0% |
| - Cyclométhicone (Brentag) | 40,0% |
| - Markol 82 (Esso) | 25,0 % |
| - Huile d'amande douce (Soliance) | 5,0% |
| - Huile de germe de blé (Soliance) | 5,0% |
| - Huile de chanvre | 3,0% |
| - Huile essentielle de pépins de raisin | 2,0% |

Les ingrédients sont mélangés à température ambiante, sous agitation douce. On obtient un liquide limpide et stable selon les critères établis précédemment.

### Exemple 19

### Préparation d'une mini-émulsion à partir de concentré émulsionnable de l'invention.

6g du concentré émulsionnable de l'exemple 18 sont préparés dans un récipient. A part, on pèse 1,5g de glycérol et 12,5g d'eau osmosée. Les ingrédients sont chauffés à 75°C puis sous agitation mécanique (2000 tours par minute/Polytron) on verse la phase aqueuse sur le concentré émulsionnable. On obtient ainsi une mini-émulsion bleutée, fluide et stable selon les critères établis précédemment.

| | | | |
|---|---|---|---|
| Caractéristiques de l'émulsion : | Aspect | = | Mini-émulsion |
| | Viscosité | = | < 10 cps (20°C) |
| | pH | = | 5,4 |
| | Stabilité | = | (0%,0%,0%) |
| | D[4,3] | = | 0,5 µm. |

### Exemple comparatif 1

### Procédé de préparation de polyglucosides d'alkyles et d'alcool gras.

Dans un réacteur polyvalent, 300g de D-glucose sont mélangés dans 275,3g d'octanol, 80,8g de décanol et 80,8g de dodécanol acidifiés par de l'acide sulfurique. Le milieu réactionnel est maintenu sous pression réduite (50 à 70 mbars) pendant 3 heures à 90°C. Après filtration et neutralisation de l'acidité du milieu par de la soude aqueuse jusqu'à pH 8 à 9, on obtient 710,3g de polyglucosides d'alkyles et d'alcools gras. L'excès d'alcools gras est ensuite évaporé grâce à un évaporateur couche mince à 190°C sous 1 mbar. Les polyglucosides d'alkyles ainsi obtenus sont mélangés dans 480,8g de 2-hexyl-décanol (ISOFOL^{®}16). Après décoloration par de l'eau oxygénée, on obtient finalement une composition contenant :

| |
|---|
| 30,1 % de polyglucosides d'octyle |
| 9,1 % de polyglucosides de décyle |
| 9,5 % de polyglucosides de dodécyle |
| 51,3 % de 2 hexyl-décanol (ISOFOL^{®} 16 - Sasol). |

| | |
|---|---|
| Caractéristiques : | - Liquide visqueux orange |
| | - Stabilité : Cristallisation / trouble/ prise en masse |
| | - Viscosité = 13800 cps (20°C). |

La composition ne possède pas une viscosité, ni une stabilité telle que définie dans la présente invention.

### Exemple Comparatif 2

### Procédé de préparation de polyxylosides d'alkyles et d'alcool gras

Dans un réacteur polyvalent, 300g de D-Xylose sont mélangés dans 444g de butanol acidifiés par de l'acide sulfurique. Le milieu réactionnel est maintenu à la température de 100°C pendant 3 heures. 150g du milieu réactionnel précédent sont ensuite ajoutés à 100°C et en 90 minutes sur 155g d'ISOFOL® 16 (2 hexyl-décanol) acidifiés par de l'acide sulfurique sous pression réduite afin d'éliminer en continu le butanol et l'eau formée. Après filtration et neutralisation de l'acidité du milieu par de la soude aqueuse jusqu'à pH 8 à 9, on obtient 202,3g de polyxylosides d'alkyles et d'ISOFOL® 16.

On obtient finalement une composition contenant :

| |
|---|
| 51,8 % de polyxylosides de 2-hexyl-décyle |
| 49,2 % de 2-hexyl-décanol (ISOFOL^{®} 16-Sasol) |

| | |
|---|---|
| Caractéristiques : | - Liquide visqueux |
| | - Viscosité = 2100 cps. |

La composition ne possède pas une viscosité telle que définie dans la présente invention.

### Exemples comparatifs 3 à 4

### Mise en évidence de la fabrication de mini-émulsion avec les compositions de l'invention : étude comparative

Afin de mettre en évidence les propriétés particulières des compositions à base de polyglycosides d'alkyles et d'alcools gras conformes à la présente invention, la demanderesse a réalisé diverses émulsions au moyen des compositions de l'exemple 2 ainsi que des compositions des exemples comparatifs 1 et 2 et de produits commerciaux comme agents émulsionnants.

Les formules présentent les compositions suivantes :

| | | | |
|---|---|---|---|
| Etude 1 : | Phase A | Agent émulsionnant | 6,0% |
| | | Cyclométhicone (Brentag) | 8,0% |
| | | Myristate d'isopropyle (Oleon) | 2,0% |
| | | Markol 82 (Esso) | 2,0% |
| | | Stéarate de glycerol (Interchimie) | 0,3% |
| | | Phénonip ® (Clariant) | 0,2% |
| | Phase B | Glycérol | 2,0% |
| | | Eau | Qsp 100% |
| Etude 2 : | Phase A | Agent émulsionnant | 6,0% |
| | | Cyclométhicone (Brentag)- | 6,0% |
| | | Markol 82 (Esso) | 6,0% |
| | | Myristate d'isopropyle (Oleon) | 2,0% |
| | | Phénonip® (Clariant) | 0,3% |
| | Phase B | Glycérol | 3,0% |
| | | Eau | Qsp 100% |

Les émulsions sont toutes préparées de manière identique. Les phase A et B sont chauffées à 75°C pendant 20 minutes puis on ajoute la phase B sur la phase A en 2 minutes sous agitation mécanique (2000 tours par minute/Polytron). Les émulsions sont ensuite laissées au repos à 20°C pendant 15 heures.

Les résultats obtenus sont mentionnés dans le tableau IV.

**Tableau IV**

| | Agent Emulsionnant | | | |
|---|---|---|---|---|
| | Exemple 2 | Exemple Comparatif 1 | Emulgin® VL 75 | Exemple comparatif 2 |
| Etude 1 | | | | |
| Aspect | Mini-émulsion liquide | Emulsion | Emulsion | Emulsion |
| D[4,3] | 0,2 | 2,0 | 1,2 | 4.7 |
| Stabilité | (0%,0%,0%) | (30%, 20%,0%) | (0%,10%,0%) | (60%,40%,0%) |

| Etude 2 | | | | |
|---|---|---|---|---|
| Aspect | Mini-émulsion bleutée | Emulsion | Emulsion | Emulsion |
| D[4,3] | 0,3 | 2,1 | 1,5 | 5.1 |
| Stabilité | (0%,0%,0%) | (70%,20%,0%) | (0%,15%,0%) | (80%, 20%,0%) |

Les résultats obtenus démontrent que seule la composition de l'invention représentée par la composition de l'exemple 2 permet d'obtenir des mini-émulsions de granulométries inférieures à 1 µm, fluides et parfaitement stables dans le temps.

## Revendications

1. Emulsionnant à base de polyglycosides d'alkyles et d'alcools gras **caractérisé en ce qu'**il comprend au moins un polyglycoside d'alkyles de formule (A) :
RO(G₁)a(G₂)b(G₃)c(G₄)d(G₅)e (A)
dans laquelle R est un radical aliphatique linéaire, avec ou sans insaturations, ayant 4 à 14 atomes de carbone, G₁,G₂,G₃,G₄,G₅ sont des restes identiques ou différents d'oses choisis parmi les hexoses et les pentoses, a,b,c,d,et e étant égaux à 0 ou 1, la somme de a, b, c, d, et e étant au moins égale à 1 et au moins un alcool ramifié de formule (B) :
CH(CₙH₂ₙ₊₁)(CₘH₂ₘ₊₁)CH₂-OH (B)
dans laquelle m est un nombre entier compris entre 4 et 18, n est un nombre entier compris entre 2 et 18 et la somme (n+m) est supérieure ou égale à 6.

2. Emulsionnant selon la revendication 1, **caractérisé en ce qu'**il contient de 20 à 95% de composé de formule (A) et 5 à 80% de composé de formule (B).

3. Emulsionnant selon l'une quelconque des revendications 1 et 2,
**caractérisé en ce que** le mélange polyglycosides d'alkyles (A) contient :
* 5 à 95 % en poids de polyglycoside d'alkyles de formule
(I) : R₁O(G₁)a(G₂)b(G₃)c(G₄)d(G₅)e (I)
* et de 95 à 5% en poids de polyglycoside d'alkyles de formule (II) :
R₂O(G₁)a(G₂)b(G₃)c(G₄)d(G₅)e (II)
dans lesquelles R₁ est un radical aliphatique linéaire, avec ou sans insaturation, ayant 8 atomes de carbone, R₂ un radical aliphatique linéaire, avec ou sans insaturation, à 10 atomes de carbone, G₁,G₂,G₃,G₄,G₅ sont des restes identiques ou différents d'oses choisis parmi les hexoses et les pentoses, a,b,c,d,et e étant égaux à 0 ou 1, la somme de a, b, c, d, et e étant au moins égale à 1.

4. Emulsionnant selon l'une quelconque des revendications 1 à 3
**caractérisé en ce que** le mélange de polyglycosides d'alkyles de formule (A) contient au moins un composé de formule (III) :
R₃O(G₁)a(G₂)b(G₃)c(G₄)d(G₅)e (III)
dans lesquelles R₃ est un radical aliphatique linéaire, avec ou sans insaturation, ayant 12 atomes de carbone, G₁,G₂,G₃,G₄,G₅ sont des restes identiques ou différents d'oses choisis parmi les hexoses et les pentoses, a,b,c,d,et e étant égaux à 0 ou 1, la somme de a, b, c, d, et e étant au moins égale à 1.

5. Emulsionnant selon l'une quelconque des revendications 1 à 4 **caractérisé en ce que** le mélange de polyglycosides d'alkyle de formule (A) contient de 1 à 60% de polyglycosides d'alkyles de formule (III).

6. Emulsionnant selon l'une quelconque des revendications 1 à 5 **caractérisé en ce que** le mélange de polyglycosides d'alkyles de formule (A) contient au moins un composé de formule (IV) :
R₄O(G₁)a(G₂)b(G₃)c(G₄)d(G₅)e (IV)
dans lesquelles R₄ est un radical aliphatique linéaire, avec ou sans insaturation, ayant 14 atomes de carbone, G₁,G₂,G₃,G₄,G₅ sont des restes identiques ou différents d'oses choisis parmi les hexoses et les pentoses, a,b,c,d,et e étant égaux à 0 ou 1, la somme de a, b, c, d, et e étant au moins égale à 1.

7. Emulsionnant selon l'une quelconque des revendications 1 à 6 **caractérisé en ce que** le mélange de polyglycosides d'alkyle de formule (A) contient de 1 à 10% de polyglycosides d'alkyles de formule (IV).

8. Emulsionnant selon l'une quelconque des revendications 1 à 7 **caractérisé en ce qu'**il contient :
40 à 60% en poids d'un mélange de polyglycosides d'alkyles (A) constitué de :
- 50 à 70% en poids d'un polyglycoside d'alkyle de formule (I) :
- 10 à 30% en poids d'un polyglycoside d'alkyle de formule (II) :
- 10 à 30% en poids d'un polyglycoside d'alkyle de formule (III) :
Et de 60 à 40% en poids d'un ou plusieurs alcools de formule (B) avec m est un nombre entier compris entre 4 et 6 et n est un nombre entier compris entre 6 à 8.

9. Emulsionnant selon l'une quelconque des revendications 1 à 8 **caractérisé en ce que** les polyglycosides d'alkyles de formules (A) peuvent, comporter à titre de reste de saccharide représenté respectivement par G₁,G_{2.} G₃, G₄ et G₅ un reste de glucose ou dextrose, fructose, galactose, maltose, maltotriose, lactose, mannose, ribose, sorbose, arabinose ou xylose et leurs isomères.

10. Emulsionnant selon l'une quelconque des revendications 1 à 9 **caractérisé en ce que** les polyglycosides d'alkyles de formules (A) contiennent 0 à 20 % en poids par rapport au poids total des polyglycosides d'alkyles, de polyhexosides d'alkyles et 80 à 100% en poids par rapport au poids "total des polyglycosides d'alkyles, de polypentosides d'alkyles.

11. Emulsionnant selon l'une quelconque des revendications 1 à 10 **caractérisé en ce que** les polyglycosides d'alkyles de formules (A) contiennent 0 à 3 % en poids par rapport au poids total des polyglycosides d'alkyles, de polyhexosides d'alkyles et 97 à 100% en poids par rapport au poids total des polyglycosides d'alkyles, de polypentosides d'alkyles.

12. Emulsionnant selon l'une quelconque des revendications 1 à 11 **caractérisé en ce que** les polyhexosides d'alkyles sont constitués exclusivement de polyglucosides d'alkyles et les polypentosides d'alkyles sont constitués exclusivement de polyxylosides d'alkyles.

13. Emulsion vaporisable comprenant une phase aqueuse, une phase huileuse et au moins un émulsionnant **caractérisé en ce que** ledit émulsionnant est tel que défini dans l'une quelconque des revendications 1 à 12.

14. Emulsion selon la revendication 13, **caractérisée en ce qu'**elle contient :
- De 0,1 à 95% en poids, de préférence de 0,5 à 50% en poids, de préférence encore de 1 à 15% et de préférence encore de 1 à 7% d'émulsionnants tels que définis dans l'une quelconque des revendications 1 à 12,
- de 2 à 95% en poids et de préférence de 2 à 25% en poids d'une phase grasse contenant ou non un ou plusieurs actifs lipophiles et,
- une phase aqueuse contenant ou non un ou plusieurs actifs hydrophiles.

15. Emulsion selon l'une quelconque des revendications 13 et 14 **caractérisée en ce que** la taille des gouttelettes dispersées est comprise entre 0,05 et 1 micromètre de diamètre.

16. Emulsion selon l'une quelconque des revendications 13 à 15 **caractérisée en ce que** l'émulsion est une mini-émulsion.

17. Procédé de préparation de l'émulsion telle que définie à l'une quelconque des revendications 13 à 15, **caractérisé en ce que** l'émulsionnant tel que défini dans l'une quelconque des revendications 1 à 12 est solubilisé, soit à température ambiante soit à une température inférieure ou égale à 90°C, dans la phase huileuse de manière à obtenir un mélange homogène puis est ajoutée lentement sous agitation mécanique, de 500 à 15000 tours par minute et de préférence de 1000 à 2000 tours par minute, la phase aqueuse.

18. Concentré émulsionnable **caractérisé en ce qu'**il contient au moins une phase huileuse et au moins un émulsionnant tel que défini dans l'une quelconque des revendications 1 à 12.

19. Concentré émulsionnable selon la revendication 18 **caractérisé en ce qu'**il contient moins de 2% d'eau.

20. Concentré émulsionnable selon l'une quelconque des revendications 18 et 19 **caractérisé en ce qu'**il contient :
- 1 à 95 % en poids d'émulsionnant tels que défini dans l'une quelconque des revendications 1 à 12,
- 5 à 99 % en poids d'une phase grasse constituée d'une ou plusieurs huiles et contenant ou non un ou plusieurs actifs lipophiles.

21. Concentré émulsionnable selon l'une quelconque des revendications 18 à 20 **caractérisé en ce qu'**il contient une ou plusieurs huiles essentielles.

22. Emulsion comprenant une phase aqueuse, une phase huileuse et un émulsionnant **caractérisée en ce que** ladite émulsion est préparée par le mélange du concentré émulsionnable tel que défini dans l'une quelconque des revendications 18 à 21 et d'une phase aqueuse contenant ou non un ou plusieurs actifs hydrophiles.

23. L'utilisation des émulsions vaporisables suivant l'une quelconque des revendications 13 à 16 et 22 dans des compositions cosmétiques ou pharmaceutiques.

24. L'utilisation des émulsions vaporisables suivant l'une quelconque des revendications 13 à 16 et 22 dans des compositions phytosanitaires ou insecticides.

25. L'utilisation des émulsions vaporisables suivant l'une quelconque des revendications 13 à 16 et 22 dans des compositions pour l'imprégnation des tissus ou lingettes.

26. Utilisation des concentrés émulsionnables selon l'une quelconque des revendications 18 à 21 dans des compostions cosmétiques ou pharmaceutiques.

27. Utilisation des concentrés émulsionnables selon l'une quelconque des revendications 18 à 21 dans des compositions phytosanitaires ou insecticides.

28. Utilisation des concentrés émulsionnables selon l'une quelconque des revendications 18 à 21 dans des compositions détergentes.

## Claims

1. Emulsifier based on alkyl polyglycosides and fatty alcohols, **characterised in that** it comprises at least one alkyl polyglycoside of formula (A):
RO(G₁)a(G₂)b(G₃)c(G₄)d(G₅)e (A),
in which R is a linear aliphatic radical, with or without unsaturated bonds, having from 4 to 14 carbon atoms, and G₁, G₂, G₃, G₄ and G₅ are identical or different radicals of oses selected from the hexoses and pentoses, a, b, c, d and e being 0 or 1, the sum of a, b, c, d and e being at least 1, and at least one branched alcohol of formula (B):
CH(CₙH₂ₙ₊₁)(CₘH₂ₘ₊₁)CH₂-OH (B),
in which m is an integer from 4 to 18, n is an integer from 2 to 18, and the sum of (n+m) is greater than or equal to 6.

2. Emulsifier according to claim 1, **characterised in that** it comprises from 20 to 95% compound of formula (A) and from 5 to 80% compound of formula (B).

3. Emulsifier according to either claim 1 or claim 2, **characterised in that** the mixture of alkyl polyglycosides (A) comprises:
* from 5 to 95 wt.% alkyl polyglycoside of formula (I):
R₁O(G₁)a(G₂)b(G₃)C(G₄)d(G₅)e (I)
* and from 95 to 5 wt.% alkyl polyglycoside of formula (II):
R₂O(G₁)a(G₂)b(G₃)c(G₄)d(G₅)e (II),
in which R₁ is a linear aliphatic radical, with or without an unsaturated bond, having 8 carbon atoms, R₂ is a linear aliphatic radical, with or without an unsaturated bond, having 10 carbon atoms, and G₁, G₂, G₃, G₄ and G₅ are identical or different radicals of oses selected from the hexoses and pentoses, a, b, c, d and e being 0 or 1, the sum of a, b, c, d and e being at least 1.

4. Emulsifier according to any one of claims 1 to 3, **characterised in that** the mixture of alkyl polyglycosides of formula (A) comprises at least one compound of formula (III):
R₃O(G₁)a(G₂)b(G₃)c(G₄)d(G₅)e (III),
in which R₃ is a linear aliphatic radical, with or without an unsaturated bond, having 12 carbon atoms, and G₁, G₂, G₃, G₄ and G₅ are identical or different radicals of oses selected from the hexoses and pentoses, a, b, c, d and e being 0 or 1, the sum of a, b, c, d and e being at least 1.

5. Emulsifier according to any one of claims 1 to 4, **characterised in that** the mixture of alkyl polyglycosides of formula (A) comprises from 1 to 60% alkyl polyglycosides of formula (III).

6. Emulsifier according to any one of claims 1 to 5, **characterised in that** the mixture of alkyl polyglycosides of formula (A) comprises at least one compound of formula (IV):
R₄O(G₁)a(G₂)b(G₃)c(G₄)d(G₅)e (IV),
in which R₄ is a linear aliphatic radical, with or without an unsaturated bond, having 14 carbon atoms, and G₁, G₂, G₃, G₄ and G₅ are identical or different radicals of oses selected from the hexoses and pentoses, a, b, c, d and e being 0 or 1, the sum of a, b, c, d and e being at least 1.

7. Emulsifier according to any one of claims 1 to 6, **characterised in that** the mixture of alkyl polyglycosides of formula (A) comprises from 1 to 10% alkyl polyglycosides of formula (IV).

8. Emulsifier according to any one of claims 1 to 7, **characterised in that** it comprises:
from 40 to 60 wt.% of a mixture of alkyl polyglycosides (A) constituted by:
- from 50 to 70 wt.% of an alkyl polyglycoside of formula (I);
- from 10 to 30 wt.% of an alkyl polyglycoside of formula (II);
- from 10 to 30 wt.% of an alkyl polyglycoside of formula (III);
and from 60 to 40 wt.% of one or more alcohols of formula (B) wherein m is an integer from 4 to 6 and n is an integer from 6 to 8.

9. Emulsifier according to any one of claims 1 to 8, **characterised in that** the alkyl polyglycosides of formula (A) can comprise as a saccharide radical represented by G₁, G₂, G₃, G₄ and G₅ a glucose or dextrose, fructose, galactose, maltose, maltotriose, lactose, mannose, ribose, sorbose, arabinose or xylose radical and their isomers.

10. Emulsifier according to any one of claims 1 to 9, **characterised in that** the alkyl polyglycosides of formula (A) comprise from 0 to 20 wt.%, based on the total weight of the alkyl polyglycosides, of alkyl polyhexosides and from 80 to 100 wt.%, based on the total weight of the alkyl polyglycosides, of alkyl polypentosides.

11. Emulsifier according to any one of claims 1 to 10, **characterised in that** the alkyl polyglycosides of formula (A) comprise from 0 to 3 wt.%, based on the total weight of the alkyl polyglycosides, of alkyl polyhexosides and from 97 to 100 wt.%, based on the total weight of the alkyl polyglycosides, of alkyl polypentosides.

12. Emulsifier according to any one of claims 1 to 11, **characterised in that** the alkyl polyhexosides are constituted solely of alkyl polyglucosides, and the alkyl polypentosides are constituted solely of alkyl polyxylosides.

13. Vaporisable emulsion comprising an aqueous phase, an oily phase and at least one emulsifier, **characterised in that** said emulsifier is as defined in any one of claims 1 to 12.

14. Emulsion according to claim 13, **characterised in that** it comprises:
- from 0.1 to 95 wt.%, preferably from 0.5 to 50 wt.%, more preferably from 1 to 15% and yet more preferably from 1 to 7%, emulsifiers as defined in any one of claims 1 to 12,
- from 2 to 95 wt.%, preferably from 2 to 25 wt.%, of a fatty phase which may or may not contain one or more lipophilic agents, and
- an aqueous phase which may or may not contain one or more hydrophilic agents.

15. Emulsion according to either claim 13 or claim 14, **characterised in that** the size of the dispersed droplets is from 0.05 to 1 micrometre in diameter.

16. Emulsion according to any one of claims 13 to 15, **characterised in that** the emulsion is a miniemulsion.

17. Process for the preparation of the emulsion as defined in any one of claims 13 to 15, **characterised in that** the emulsifier as defined in any one of claims 1 to 12 is solubilised, either at ambient temperature or at a temperature less than or equal to 90°C, in the oily phase in order to obtain a homogeneous mixture, and then the aqueous phase is added slowly, with mechanical stirring at from 500 to 15,000 revolutions per minute, preferably from 1000 to 2000 revolutions per minute.

18. Emulsifiable concentrate, **characterised in that** it comprises at least one oily phase and at least one emulsifier as defined in any one of claims 1 to 12.

19. Emulsifiable concentrate according to claim 18, **characterised in that** it comprises less than 2% water.

20. Emulsifiable concentrate according to either claim 18 or claim 19, **characterised in that** it comprises:
- from 1 to 95 wt.% emulsifier as defined in any one of claims 1 to 12,
- from 5 to 99 wt.% of a fatty phase which is constituted by one or more oils and which may or may not contain one or more lipophilic agents.

21. Emulsifiable concentrate according to any one of claims 18 to 20, **characterised in that** it comprises one or more essential oils.

22. Emulsion comprising an aqueous phase, an oily phase and an emulsifier, **characterised in that** said emulsion is prepared by mixing the emulsifiable concentrate as defined in any one of claims 18 to 21 and an aqueous phase which may or may not contain one or more hydrophilic agents.

23. Use of the vaporisable emulsions according to any one of claims 13 to 16 and 22 in cosmetic or pharmaceutical compositions.

24. Use of the vaporisable emulsions according to any one of claims 13 to 16 and 22 in phytosanitary or insecticidal compositions.

25. Use of the vaporisable emulsions according to any one of claims 13 to 16 and 22 in compositions for impregnating nonwoven fabrics or wipes.

26. Use of the emulsifiable concentrates according to any one of claims 18 to 21 in cosmetic or pharmaceutical compositions.

27. Use of the emulsifiable concentrates according to any one of claims 18 to 21 in phytosanitary or insecticidal compositions.

28. Use of the emulsifiable concentrates according to any one of claims 18 to 21 in detergent compositions.

## Patentansprüche

1. Emulgator auf Basis von Alkylpolyglykosiden und Fettalkoholen, **dadurch gekennzeichnet, dass** er mindestens ein Alkylpolyglykosid der Formel (A):
RO(G₁)a(G₂)b(G₃)c(G₄)d(G₅)e (A),
worin R ein lineares aliphatisches Radikal mit ungesättigten oder ohne ungesättigte Stellen mit 4 bis 14 Kohlenstoffatomen ist, G₁, G₂, G₃, G₄, G₅ gleiche oder verschiedene Reste von Monosacchariden sind, die aus Hexosen und Pentosen ausgewählt sind, wobei a, b, c, d und e gleich 0 oder 1 sind und die Summe von a, b, c, d und e mindestens gleich 1 ist, und mindestens einen verzweigten Alkohol der Formel (B) umfasst:
CH(CₙH₂ₙ₊₁)(CₘH₂ₘ₊₁)CH₂-OH (B),
worin m eine ganze Zahl zwischen 4 und 18 ist, n eine ganze Zahl zwischen 2 und 18 ist, und die Summe (n+m) größer oder gleich 6 ist.

2. Emulgator nach Anspruch 1, **dadurch gekennzeichnet, dass** er 20 bis 95% der Verbindung der Formel (A) und 5 bis 80% der Verbindung der Formel (B) enthält.

3. Emulgator nach einem der Ansprüche 1 und 2, **dadurch gekennzeichnet, dass** das Gemisch der Alkylpolyglykoside (A) enthält:
• 5 bis 95 Gew.-% Alkylpolyglykosid der Formel (I):
R₁Q(G₁)a(G₂)b(G₃)c(G₄)d(G₅)e (I)
• und 95 bis 5 Gew.-% Alkylpolyglykosid der Formel (II) :
R₂O(G₁)a(G₂)b(G₃)c(G₄)d(G₅)e (II),
worin R₁ ein lineares aliphatisches Radikal mit ungesättigten oder ohne ungesättigte Stellen mit 8 Kohlenstoffatomen ist, R₂ ein lineares aliphatisches Radikal mit ungesättigten oder ohne ungesättigte Stellen mit 10 Kohlenstoffatomen ist, G₁, G₂, G₃, G₄, G₅ gleiche oder verschiedene Reste von Monosacchariden sind, die aus Hexosen und Pentosen ausgewählt sind, wobei a, b, c, d und e gleich 0 oder 1 sind und die Summe von a, b, c, d und e mindestens gleich 1 ist.

4. Emulgator nach einem der Ansprüche 1 bis 3, **dadurch gekennzeichnet, dass** das Gemisch der Alkylpolyglykoside der Formel (A) mindestens eine Verbindung der Formel (III) enthält:
R₃O(G₁)a(G₂)b(G₃)c(G₄)d(G₅)e (III),
worin R₃ ein lineares aliphatisches Radikal mit ungesättigten oder ohne ungesättigte Stellen mit 12 Kohlenstoffatomen ist, G₁, G₂, G₃, G₄, G₅ gleiche oder verschiedene Reste von Monosacchariden sind, die aus Hexosen und Pentosen ausgewählt sind, wobei a, b, c, d und e gleich 0 oder 1 sind und die Summe von a, b, c, d und e mindestens gleich 1 ist.

5. Emulgator nach einem der Ansprüche 1 bis 4, **dadurch gekennzeichnet, dass** das Gemisch der Alkylpolyglykoside der Formel (A) 1 bis 60% Alkylpolyglykoside der Formel (III) enthält.

6. Emulgator nach einem der Ansprüche 1 bis 5, **dadurch gekennzeichnet, dass** das Gemisch der Alkylpolyglykoside der Formel (A) mindestens eine Verbindung der Formel (IV) enthält:
R₃O(G₁)a(G₂)b(G₃)c(G₄)d(G₅)e (III),
worin R₄ ein lineares aliphatisches Radikal mit ungesättigten oder ohne ungesättigte Stellen mit 14 Kohlenstoffatomen ist, G₁, G₂, G₃, G₄, G₅ gleiche oder verschiedene Reste von Monosacchariden sind, die aus Hexosen und Pentosen ausgewählt sind, wobei a, b, c, d und e gleich 0 oder 1 sind und die Summe von a, b, c, d und e mindestens gleich 1 ist.

7. Emulgator nach einem der Ansprüche 1 bis 6, **dadurch gekennzeichnet, dass** das Gemisch der Alkylpolyglykoside der Formel (A) 1 bis 10% Alkylpolyglykoside der Formel (IV) enthält.

8. Emulgator nach einem der Ansprüche 1 bis 7, **dadurch gekennzeichnet, dass** er enthält:
40 bis 60 Gew.-% eines Gemischs von Alkylpolyglykosiden (A), das besteht aus:
- 50 bis 70 Gew.-% eines Alkylpolyglykosids der Formel (I),
- 10 bis 30 Gew.-% eines Alkylpolyglykosids der Formel (II),
- 10 bis 30 Gew.-% eines Alkylpolyglykosids der Formel (III),
- und 60 bis 40 Gew.-% eines Alkohols oder mehrerer Alkohole der Formel (B), wobei m eine ganze Zahl zwischen 4 und 6 und n eine ganze Zahl zwischen 6 und 8 ist.

9. Emulgator nach einem der Ansprüche 1 bis 8, **dadurch gekennzeichnet, dass** die Alkylpolyglykoside der Formeln (A) als Saccharidrest, der jeweils durch G₁, G₂, G₃, G₄ und G₅ dargestellt ist, einen Glukose- oder Dextrose-, Fruktose-, Galaktose-, Maltose-, Maltotriose-, Laktose-, Mannose-, Ribose-, Sorbose-, Arabinose- oder Xyloserest und deren Isomere umfassen können.

10. Emulgator nach einem der Ansprüche 1 bis 9, **dadurch gekennzeichnet, dass** die Alkylpolyglykoside der Formeln (A) auf das Gesamtgewicht der Alkylpolyglykoside bezogen 0 bis 20 Gew.-% Alkylpolyhexoside und auf das Gesamtgewicht der Alkylpolyglykoside bezogen 80 bis 100 Gew.-% Alkylpolypentoside enthalten.

11. Emulgator nach einem der Ansprüche 1 bis 10, **dadurch gekennzeichnet, dass** die Alkylpolyglykoside der Formeln (A) auf das Gesamtgewicht der Alkylpolyglykoside bezogen 0 bis 3 Gew.-% Alkylpolyhexoside und auf das Gesamtgewicht der Alkylpolyglykoside bezogen 97 bis 100 Gew.-% Alkylpolypentoside enthalten.

12. Emulgator nach einem der Ansprüche 1 bis 11, **dadurch gekennzeichnet, dass** die Alkylpolyhexoside ausschließlich aus Alkylpolyglukosiden bestehen, und die Alkylpolypentoside ausschließlich aus Alkylpolyxylosiden bestehen.

13. Zerstäubbare Emulsion, die eine Wasserphase, eine Ölphase und mindestens einen Emulgator umfasst, **dadurch gekennzeichnet, dass** der Emulgator ein wie in einem der Ansprüche 1 bis 12 definierter Emulgator ist.

14. Emulsion nach Anspruch 13, **dadurch gekennzeichnet, dass** sie enthält:
- 0,1 bis 95 Gew.-%, vorzugsweise 0,5 bis 50 Gew.-%, noch bevorzugter 1 bis 15 % und noch bevorzugter 1 bis 7% Emulgatoren, wie sie in einem der Ansprüche 1 bis 12 definiert sind,
- 2 bis 95 Gew.-% und vorzugsweise 2 bis 25 Gew.-% einer Fettphase, die gegebenenfalls einen lipophilen Wirkstoff oder mehrere lipophile Wirkstoffe enthält, und
- eine Wasserphase, die gegebenenfalls einen hydrophilen Wirkstoff oder mehrere hydrophile Wirkstoffe enthält.

15. Emulsion nach einem der Ansprüche 13 und 14, **dadurch gekennzeichnet, dass** die Größe der dispergierten Tröpfchen vom Durchmesser her zwischen 0,05 und 1 Mikrometer beträgt.

16. Emulsion nach einem der Ansprüche 13 bis 15, **dadurch gekennzeichnet, dass** die Emulsion eine Mini-Emulsion ist.

17. Verfahren zur Zubereitung einer wie in einem der Ansprüche 13 bis 15 definierten Emulsion, **dadurch gekennzeichnet, dass** der wie in einem der Ansprüche 1 bis 12 definierte Emulgator entweder bei Umgebungstemperatur oder bei einer Temperatur von unter oder gleich 90°C in der Ölphase so gelöst wird, dass ein homogenes Gemisch erhalten wird, und dann unter mechanischem Rühren mit 500 bis 15000 Umdrehungen pro Minute und vorzugsweise 1000 bis 2000 Umdrehungen pro Minute die Wasserphase langsam zugesetzt wird.

18. Emulgierbares Konzentrat, **dadurch gekennzeichnet, dass** es mindestens eine Ölphase und mindestens einen wie in einem der Ansprüche 1 bis 12 definierten Emulgator enthält.

19. Emulgierbares Konzentrat nach Anspruch 18, **dadurch gekennzeichnet, dass** es mindestens 2% Wasser enthält.

20. Emulgierbares Konzentrat nach einem der Ansprüche 18 und 19, **dadurch gekennzeichnet, dass** es enthält:
- 1 bis 95 Gew.-% eines wie in einem der Ansprüche 1 bis 12 definierten Emulgators,
- 5 bis 99 Gew.-% einer Fettphase, die aus einem Öl oder mehreren Ölen besteht und gegebenenfalls einen lipophilen Wirkstoff oder mehrere lipophile Wirkstoffe enthält.

21. Emulgierbares Konzentrat nach einem der Ansprüche 18 bis 20, **dadurch gekennzeichnet, dass** es ein etherisches Öl oder mehrere etherische Öle enthält.

22. Emulsion, die eine Wasserphase, eine Ölphase und einen Emulgator umfasst, **dadurch gekennzeichnet, dass** die Emulsion durch Mischen des wie in einem der Ansprüche 18 bis 21 definierten emulgierbaren Konzentrats und einer Wasserphase zubereitet wird, die gegebenenfalls einen hydrophilen Wirkstoff oder mehrere hydrophile Wirkstoffe enthält.

23. Verwendung der zerstäubbaren Emulsionen nach einem der Ansprüche 13 bis 16 und 22 in kosmetischen oder pharmazeutischen Zusammensetzungen.

24. Verwendung der zerstäubbaren Emulsionen nach einem der Ansprüche 13 bis 16 und 22 in Pflanzenschutz- oder Insektizidzusammensetzungen.

25. Verwendung der zerstäubbaren Emulsionen nach einem der Ansprüche 13 bis 16 und 22 in Zusammensetzungen zum Imprägnieren/Befeuchten von Stoffen oder Feuchttüchern.

26. Verwendung der emulgierbaren Konzentrate nach einem der Ansprüche 18 bis 21 in kosmetischen oder pharmazeutischen Zusammensetzungen.

27. Verwendung der emulgierbaren Konzentrate nach einem der Ansprüche 18 bis 21 in Pflanzenschutz- oder Insektizidzusammensetzungen.

28. Verwendung der emulgierbaren Konzentrate nach einem der Ansprüche 18 bis 21 in Waschmittelzusammensetzungen.
